(19) Europäisches Patentamt / European Patent Office / Office européen des brevets

(11) **EP 4 614 907 A1**

(12) **EUROPEAN PATENT APPLICATION**
published in accordance with Art. 153(4) EPC

(43) Date of publication:
**10.09.2025   Bulletin 2025/37**

(21) Application number: **22964146.9**

(22) Date of filing: **06.11.2022**

(51) International Patent Classification (IPC):
**H04L 27/00** $^{(2006.01)}$

(52) Cooperative Patent Classification (CPC):
**H04L 27/00**

(86) International application number:
**PCT/CN2022/130167**

(87) International publication number:
**WO 2024/092845 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Dehns Germany Partnerschaft mbB**
**Theresienstraße 6-8**
**80333 München (DE)**

(54) **TRANSMISSION METHOD AND APPARATUS FOR SOUNDING REFERENCE SIGNAL, AND MEDIUM**

(57)    The present disclosure relates to a transmission method and apparatus for a sounding reference signal (SRS), and a medium. The transmission method for an SRS comprises: determining offset information on the basis of a pseudo-random sequence function, wherein the offset information is used for performing randomization processing an SRS signal transmitted by a terminal, the pseudo-random sequence function is determined on the basis of identification information, and the identification information comprises a cell identifier of a cell where the terminal is located and/or a sending and receiving point identifier corresponding to the terminal; and transmitting the SRS signal on the basis of the offset information. According to the technical solution of the present disclosure, the interference caused by the offset of an edge user SRS being the same as the offset of a central user SRS can be avoided, and the estimation performance of an uplink channel is improved.

Determining offset information based on a pseudo-random sequence function — S21

Transmitting the SRS signal based on the offset information — S22

Fig. 2

**Description**

**TECHNICAL FIELD**

The disclosure relates to the field of communication technologies, and in particular, to a method and an apparatus for transmitting a sounding reference signal, a device, and a storage medium.

**BACKGROUND**

Coordinated Multiple Points Transmission/Reception technology can improve edge coverage of cells and provide balanced service quality for users within serving cells. The Coordinated Multiple Points Transmission/Reception includes Coherent Joint Transmission (CJT) and Non-Coherent Joint Transmission (NCJT). When using CJT transmission in Time Division Duplex (TDD) systems, multiple collaborative Transmission and Reception Points (TRPs) need to obtain accurate uplink channel information of edge users. The uplink channel of the current user to multiple TRPs can be estimated by sending SRS to each TRP through the terminal.

However, the transmission of SRS by cell edge users is often interfered by the transmission of SRS by cell center users of neighboring cells, resulting in a decrease in uplink channel estimation performance.

**SUMMARY**

In order to overcome the problems existing in the related art, the present disclosure provides a method and an apparatus for transmitting a sounding reference signal, and a storage medium.

According to a first aspect of embodiments of the present disclosure, a method for transmitting a sounding reference signal (SRS) is provided. The method is performed by a terminal, and includes:

determining offset information based on a pseudo-random sequence function, wherein the offset information is used to randomize the SRS signal transmitted by the terminal, the pseudo-random sequence function is determined based on identification information, the identification information including a cell identifier of a cell where the terminal is located and/or an identifier of a transmission and reception point corresponding to the terminal; and

transmitting the SRS signal based on the offset information.

In an implementation, the pseudo-random sequence function is determined based on at least a random sequence initialization function and a maximum offset value, wherein the maximum offset value includes a comb value of an SRS sequence and/or a maximum number of maximum cyclic shifts;

the random sequence initialization function is determined based on the identification information or based on an SRS resource configuration parameter and the identification information.

In an implementation, the random sequence initialization function satisfies a formula of:

$$C_{init}(N_{ID}) = N_{ID};$$

or

$$C_{init}(N_{ID}) = \left(2^{10}(N_{symb}^{slot} n_{s,f}^{\mu} + 1)(2N_{ID} + 1) + N_{ID}\right) \bmod 2^{31};$$

wherein, $C_{init}(N_{ID})$ is the random sequence initialization function, $N_{ID}$ is the cell identifier of the cell where the terminal is located and/or the identifier of the transmission and reception point corresponding to the terminal, $N_{symb}^{slot}$ is a number of symbols occupied by the SRS sequence in a slot, and $n_{s,f}^{\mu}$ is a number of slots contained in one radio frame.

In an implementation, the SRS resource configuration parameter includes at least one of:

a number of symbols occupied by the SRS sequence in a slot;

a number of slots occupied by the SRS sequence in a radio frame;

a starting position of transmission of the SRS sequence in a slot; or

an integer value determined based on the maximum offset value.

In an implementation, the offset information includes offset information in SRS comb transmission, and the offset information in SRS comb transmission is used to determine a frequency-domain starting position of the SRS sequence corresponding to each SRS port after offset in one SRS comb transmission;

the maximum offset value is the comb value of the SRS sequence;
the pseudo-random sequence function satisfies a formula of:

$$f_{ch}(n_{s,f}^{\mu},Y)=\left(\sum_{m=0}^{X}c\left(X(N_{symb}^{slot}n_{s,f}^{\mu}+l_0+Y)+m\right)\cdot 2^m\right)\bmod K_{TC}$$

wherein, $f_{ch}(n_{s,f}^{\mu},Y)$ is a first pseudo-random sequence function; $c()$ is a Gold sequence generation function, and an initialization value of the Gold sequence generation function is the random sequence initialization function; $X$ is the comb value of the SRS sequence or an integer multiple of the comb value; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y$ is a first reference value; $m\in\{0,...,X\}$; $K_{TC}$ is the comb value of the SRS sequence; $\sum$ is a sum function; mod is a remainder function.

In an implementation, a value of $Y$ is determined by a linear sum of one or more of:

0;

$$l'\in\left\{0,1,...,N_{symb}^{SRS}-1\right\};$$

a slot t where SRS transmission is located;

an identifier $n_{ID}^{SRS}$ of the SRS sequence;

$N_{ID}$;

$$k'\in\left\{0,1,...,\ K_{TC}-1\right\};$$

$\lfloor t/T\rfloor$, wherein t is the slot t where SRS transmission is located, T is a period of the SRS transmission, $\lfloor X\rfloor$ represents downward rounding of X.

In an implementation, determining the offset information based on the pseudo-random sequence function includes:
randomizing comb transmission offset parameters of the SRS sequence based on the first pseudo-random sequence function, to obtain the offset information within SRS comb transmission.

In an implementation, the comb transmission offset parameters of the SRS sequence include offset values $k_{TC}^{(p_i)}$ of the SRS sequence corresponding to SRS ports within a comb value, and offset values $k_{offset}^{l'}$ of the SRS sequence at different symbols within a comb value;

randomizing the comb transmission offset parameters of the SRS sequence based on the first pseudo-random sequence function comprises at least one of:
randomizing $k_{TC}^{(p_i)}$ and $k_{offset}^{l'}$ as a whole based on the first pseudo-random sequence function, to obtain the offset information within SRS comb transmission; or

randomizing $k_{TC}^{(p_i)}$ based on the first pseudo-random sequence function, and obtaining the offset information within SRS comb transmission based on randomized $k_{TC}^{(p_i)}$.

In an implementation, randomizing $k_{TC}^{(p_i)}$ and $k_{offset}^{l'}$ as a whole based on the first pseudo-random sequence function to obtain the offset information within SRS comb transmission is represented by:

$$\overline{k}_0^{(p_i)} = n_{shift} N_{sc}^{RB} + (k_{TC}^{(p_i)} + k_{offset}^{l'} + f_{ch}(n_{s,f}^{\mu}, Y)) \bmod K_{TC}$$

wherein, $\overline{k}_0^{(p_i)}$ is an offset within the SRS comb transmission; $n_{shift}$ is an offset position relative to a reference point; $N_{sc}^{RB}$ is a number of subcarriers contained in a resource block (RB); $k_{TC}^{(p_i)}$ is an offset value of the SRS sequence corresponding to the i-th SRS port within a comb value; $p_i$ is an antenna port index corresponding to the i-th SRS port; $k_{offset}^{l'}$ are offset values of the SRS sequence at different symbols within a comb value; $f_{ch}(n_{s,f}^{\mu}, Y)$ is the first pseudo-random sequence function; $K_{TC}$ is the comb value; mod is a remainder function.

In an implementation, randomizing $k_{TC}^{(p_i)}$ based on the first pseudo-random sequence function is represented by:

$$\overline{k}_{TC}^{(p_i)} = \begin{cases} (\overline{k}_{TC} + K_{TC}/2 + f_{ch}(n_{s,f}^{\mu}, Y)) \bmod K_{TC} & \text{if } N_{ap}^{SRS} = 4, \ p_i \in \{1001,1003\} \text{ and } n_{SRS}^{cs,\max} = 6 \\ (\overline{k}_{TC} + K_{TC}/2 + f_{ch}(n_{s,f}^{\mu}, Y)) \bmod K_{TC} & \text{if } N_{ap}^{SRS} = 4, \ p_i \in \{1001,1003\} \text{ and } n_{SRS}^{cs} = \in \{n_{SRS}^{cs,\max}/2,..., \ n_{SRS}^{cs,\max} -1\} \\ \overline{k}_{TC} + f_{ch}(n_{s,f}^{\mu}, Y) & \text{others} \end{cases}$$

wherein, $\overline{k}_{TC}^{(p_i)}$ is an offset value obtained by randomizing the offset value of the SRS sequence corresponding to the i-th SRS port within a comb value; $\overline{k}_{TC}$ is an offset comb value; $f_{ch}(n_{s,f}^{\mu}, Y)$ is the first pseudo-random sequence function; $K_{TC}$ is the comb value; mod is a remainder function; $N_{ap}^{SRS}$ is a number of ports for SRS resources; $n_{SRS}^{cs}$ is a cyclic shift value configured by a network device; $n_{SRS}^{cs,\max}$ is a maximum number of cyclic shifts configured by the network device.

In an implementation, transmitting the SRS signal based on the offset information includes:

determining a frequency domain position occupied by SRS based on the offset information in SRS comb transmission, a starting position within a specified bandwidth size during partial frequency domain transmission, and a starting position of each hop; and
transmitting the SRS at the frequency domain position determined.

In an implementation, the offset information includes cyclic shift offset information;

the maximum offset value is the maximum number of maximum cyclic shifts;
the pseudo-random sequence function satisfies

$$f_{csh}(n_{s,f}^{\mu}, Y') = \left( \sum_{m=0}^{X'} c\left( X'(N_{symb}^{slot} n_{s,f}^{\mu} + l_0 + Y') + m \right) \cdot 2^m \right) \bmod n_{SRS}^{cs,\max}$$

wherein, $f_{csh}(n_{s,f}^{\mu}, Y')$ is a second pseudo-random sequence function; $c()$ is a Gold sequence generation function, and an initialization value of the Gold sequence generation function is the random sequence initialization function $C_{init}(N_{ID})$; $X'$ is an integer value determined by the maximum number of cyclic shifts configured by a network device, which is the maximum number of cyclic shifts, or an integer multiple of the maximum number of cyclic shifts, or the same value as a value generated by a group hop sequence; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y'$ is a second reference value; $m \in \{0,...,X\}$; $n_{SRS}^{cs,\max}$ is the maximum number of cyclic shifts configured by the network device; $\Sigma$ is a sum function; mod is a remainder function.

In an implementation, a value of $Y'$ is determined by a linear sum of one or more of:

0;

$$l' \in \left\{0,1,...,N_{symb}^{SRS}-1\right\};$$

a slot t where SRS transmission is located;

an identifier $n_{ID}^{SRS}$ of the SRS sequence;

$N_{ID}$;

$$k' \in \left\{0,1,...,\ K_{TC}\text{-}1\right\};$$

$\left\lfloor t/T \right\rfloor$, wherein t is the slot t where SRS transmission is located, T is a period of the SRS transmission, $\left\lfloor X \right\rfloor$ represents downward rounding of X; and

different SRS port indices, or different SRS port indices minus a third reference value $n_{ref}$.

In an implementation, determining the offset information based on the pseudo-random sequence function includes:

performing random offset on a cyclic shift parameter of the SRS sequence based on the second pseudo-random sequence function, to obtain cyclic shift offset information.

In an implementation, performing random offset on a cyclic shift parameter of the SRS sequence based on the second pseudo-random sequence function to obtain cyclic shift offset information is represented by at least one of:

$$n_{SRS}^{cs,i} = \begin{cases} \left(n_{SRS}^{cs} + \dfrac{n_{SRS}^{cs,\max}\left\lfloor (p_i-1000)/2 \right\rfloor}{N_{ap}^{SRS}/2} + f_{csh}(n_{s,f}^{\mu}, Y')\right)\bmod\left(I \times n_{SRS}^{cs,\max}\right) & \text{if } N_{ap}^{SRS}=4 \text{ and } n_{SRS}^{cs,\max}=6 \\[4mm] \left(n_{SRS}^{cs} + \dfrac{n_{SRS}^{cs,\max}\left\lfloor (p_i-1000) \right\rfloor}{N_{ap}^{SRS}} + f_{csh}(n_{s,f}^{\mu}, Y')\right)\bmod\left(I \times n_{SRS}^{cs,\max}\right) & \text{others} \end{cases};$$

or

$$n_{SRS}^{cs,i} = \begin{cases} \left( n_{SRS}^{cs} + \dfrac{n_{SRS}^{cs,\max} \lfloor (p_i - 1000)/2 \rfloor}{N_{ap}^{SRS}/2} \right) \bmod n_{SRS}^{cs,\max} + f_{csh}(n_{s,f}^{\mu}, Y') & \text{if } N_{ap}^{SRS} = 4 \text{ and } n_{SRS}^{cs,\max} = 6 \\ \left( n_{SRS}^{cs} + \dfrac{n_{SRS}^{cs,\max} \lfloor (p_i - 1000) \rfloor}{N_{ap}^{SRS}} \right) \bmod n_{SRS}^{cs,\max} + f_{csh}(n_{s,f}^{\mu}, Y') & \text{others} \end{cases}$$

wherein, $n_{SRS}^{cs,i}$ is the cyclic shift offset information; $N_{ap}^{SRS}$ is a number of ports for SRS resources; $n_{SRS}^{cs}$ is a cyclic shift value configured by a network device; $n_{SRS}^{cs,\max}$ is the maximum number of cyclic shifts configured by the network device; $p_i$ is an antenna port index corresponding to the i-th SRS port; $f_{csh}(n_{s,f}^{\mu}, Y')$ is the second pseudo-random sequence function; $I$ is greater than or equal to 1; mod is a remainder function.

In an implementation, transmitting the SRS signal based on the offset information includes:

generating an SRS random sequence based on the cyclic shift offset information; and
transmitting the SRS random sequence.

In an implementation, the method further includes:

in response to receiving a change indication sent by a network device, changing a comb value offset of the sounding reference signal; or
in response to receiving a change indication sent by a network device, changing a cyclic shift value of the sounding reference signal;
wherein, the change indication is sent by the network device to the terminal when time-frequency domain resources for transmitting the sounding reference signal overlap with time-frequency domain resources for transmitting another sounding reference signal.

According to a second aspect of embodiments of the present disclosure, a method for transmitting a sounding reference signal (SRS) is provided. The method is performed by a network device, and includes:

sending identification information to a terminal, so that the terminal determines a pseudo-random sequence function based on the identification information, and determines offset information based on the pseudo-random sequence function, wherein the identification information includes a cell identifier of a cell where the terminal is located and/or an identifier of a transmission and reception point corresponding to the terminal; and
receiving the SRS signal determined and transmitted by the terminal based on the offset information.

In an implementation, the method further includes:
sending an SRS resource configuration parameter to the terminal, so that the terminal determines a random sequence initialization function based on the identification information or based on the SRS resource configuration parameter and the identification information, and determines the pseudo-random sequence function at least based on the random sequence initialization function and a maximum offset value, wherein the maximum offset value includes a comb value of an SRS sequence and/or a maximum number of maximum cyclic shifts.

In an implementation, the random sequence initialization function satisfies a formula of:

$$C_{init}(N_{ID}) = N_{ID};$$

or

$$C_{init}(N_{ID}) = \left( 2^{10}(N_{symb}^{slot} n_{s,f}^{\mu} + 1)(2N_{ID} + 1) + N_{ID} \right) \bmod 2^{31};$$

wherein, $C_{init}(N_{ID})$ is the random sequence initialization function, $N_{ID}$ is the cell identifier of the cell where the terminal is located and/or the identifier of the transmission and reception point corresponding to the terminal, $N_{symb}^{slot}$ is a number of symbols occupied by the SRS sequence in a slot, and $n_{s,f}^{\mu}$ is a number of slots occupied by the SRS sequence in a radio frame.

In an implementation, the SRS resource configuration parameter includes at least one of:

a number of symbols occupied by the SRS sequence in a slot;
a number of slots occupied by the SRS sequence in a radio frame;
a starting position of transmission of the SRS sequence in a slot; or
an integer value determined based on the maximum offset value.

In an implementation, the offset information includes offset information in SRS comb transmission, and the offset information in SRS comb transmission is used to determine a frequency-domain starting position of the SRS sequence corresponding to each SRS port after offset in one SRS comb transmission;

the maximum offset value is the comb value of the SRS sequence;
the pseudo-random sequence function satisfies a formula of:

$$f_{ch}(n_{s,f}^{\mu},Y)=\left(\sum\nolimits_{m=0}^{X}c\left(X(N_{symb}^{slot}n_{s,f}^{\mu}+l_0+Y)+m\right)\cdot 2^m\right)\mathrm{mod}\,K_{TC}$$

wherein, $f_{ch}(n_{s,f}^{\mu},Y)$ is a first pseudo-random sequence function; $c()$ is a Gold sequence generation function, and an initialization value of the Gold sequence generation function is the random sequence initialization function; $X$ is the comb value of the SRS sequence or an integer multiple of the comb value; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y$ is a first reference value; $m \in \{0,...,X\}$; $K_{TC}$ is the comb value of the SRS sequence; $\sum$ is a sum function; mod is a remainder function.

In an implementation, a value of $Y$ is determined by a linear sum of one or more of:

0;

$$l' \in \left\{0,1,...,N_{symb}^{SRS}-1\right\}_{;}$$

a slot t where SRS transmission is located;
an identifier $n_{ID}^{SRS}$ of the SRS sequence;
$N_{ID}$;

$$k' \in \left\{0,1,...,\ K_{TC}\text{-}1\right\}_{;}$$

$\lfloor t/T \rfloor$, wherein t is the slot t where SRS transmission is located, T is a period of the SRS transmission, $\lfloor X \rfloor$ represents downward rounding of X.

In an implementation, determining the offset information based on the pseudo-random sequence function includes:

randomizing comb transmission offset parameters of the SRS sequence based on the first pseudo-random sequence function, to obtain the offset information within SRS comb transmission;

wherein the comb transmission offset parameters of the SRS sequence include offset values $k_{TC}^{(p_i)}$ of the SRS sequence corresponding to SRS ports within a comb value, and offset values *of* the SRS sequence at different symbols within a comb value;

randomizing the comb transmission offset parameters of the SRS sequence based on the first pseudo-random sequence function includes at least one of:

randomizing $k_{TC}^{(p_i)}$ and $k_{offset}^{l'}$ as a whole based on the first pseudo-random sequence function, to obtain the offset information within SRS comb transmission; or

randomizing $k_{TC}^{(p_i)}$ based on the first pseudo-random sequence function, and obtaining the offset information within SRS comb transmission based on randomized $k_{TC}^{(p_i)}$.

In an implementation, randomizing $k_{TC}^{(p_i)}$ and $k_{offset}^{l'}$ as a whole based on the first pseudo-random sequence function to obtain the offset information within SRS comb transmission is represented by:

$$\overline{k}_0^{(p_i)} = n_{shift} N_{sc}^{RB} + (k_{TC}^{(p_i)} + k_{offset}^{l'} + f_{ch}(n_{s,f}^{\mu}, Y)) \bmod K_{TC}$$ wherein, $\overline{k}_0^{(p_i)}$ is an offset within the SRS comb transmission; $n_{shift}$ is an offset position relative to a reference point; $N_{sc}^{RB}$ is a number of subcarriers contained in a resource block (RB); $k_{TC}^{(p_i)}$ is an offset value of the SRS sequence corresponding to the i-th SRS port within a comb value; $p_i$ is an antenna port index corresponding to the i-th SRS port; $k_{offset}^{l'}$ are offset values of the SRS sequence at different symbols within a comb value; $f_{ch}(n_{s,f}^{\mu}, Y)$ is the first pseudo-random sequence function; $K_{TC}$ is the comb value; mod is a remainder function.

In an implementation, randomizing $k_{TC}^{(p_i)}$ based on the first pseudo-random sequence function is represented by:

$$\overline{k}_{TC}^{(p_i)} = \begin{cases} (\overline{k}_{TC} + K_{TC}/2 + f_{ch}(n_{s,f}^{\mu}, Y)) \bmod K_{TC} & \text{if } N_{ap}^{SRS} = 4, \ p_i \in \{1001, 1003\} \text{ and } n_{SRS}^{cs,\max} = 6 \\ (\overline{k}_{TC} + K_{TC}/2 + f_{ch}(n_{s,f}^{\mu}, Y)) \bmod K_{TC} & \text{if } N_{ap}^{SRS} = 4, \ p_i \in \{1001, 1003\} \text{ and } n_{SRS}^{cs} = \in \{n_{SRS}^{cs,\max}/2, \dots, n_{SRS}^{cs,\max} - 1\} \\ \overline{k}_{TC} + f_{ch}(n_{s,f}^{\mu}, Y) & \text{others} \end{cases}$$

wherein, $\overline{k}_{TC}^{(p_i)}$ is an offset value obtained by randomizing the offset value of the SRS sequence corresponding to the i-th SRS port within a comb value; $\overline{k}_{TC}$ is an offset comb value; $f_{ch}(n_{s,f}^{\mu}, Y)$ is the first pseudo-random sequence function; $K_{TC}$ is the comb value; mod is a remainder function; $N_{ap}^{SRS}$ is a number of ports for SRS resources; $n_{SRS}^{cs}$ is a cyclic shift value configured by a network device; $n_{SRS}^{cs,\max}$ is a maximum number of cyclic shifts configured by the network device.

In an implementation, the offset information includes cyclic shift offset information;

the maximum offset value is the maximum number of maximum cyclic shifts;
the pseudo-random sequence function satisfies

$$f_{csh}(n_{s,f}^{\mu}, Y') = \left( \sum_{m=0}^{X'} c\left( X'(N_{symb}^{slot} n_{s,f}^{\mu} + l_0 + Y') + m \right) \cdot 2^m \right) \bmod n_{SRS}^{cs,\max}$$

wherein, $f_{csh}(n_{s,f}^{\mu}, Y')$ is a second pseudo-random sequence function; $c()$ is a Gold sequence generation function, and an initialization value of the Gold sequence generation function is the random sequence initialization function $C_{init}$

($N_{ID}$); $X'$ is an integer value determined by the maximum number of cyclic shifts configured by a network device, which is the maximum number of cyclic shifts, or an integer multiple of the maximum number of cyclic shifts, or the same value as a value generated by a group hop sequence; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y'$ is a second reference value; $m \in \{0,...,X\}$; $n_{SRS}^{cs,\max}$ is the maximum number of cyclic shifts configured by the network device; $\sum$ is a sum function; mod is a remainder function.

In an implementation, a value of $Y'$ is determined by a linear sum of one or more of:

0;

$$I' \in \left\{0, 1, ..., N_{symb}^{SRS} - 1\right\};$$

a slot t where SRS transmission is located;

an identifier $n_{ID}^{SRS}$ of the SRS sequence;

$N_{ID}$;

$$k' \in \left\{0, 1, ..., K_{TC} - 1\right\};$$

$\lfloor t/T \rfloor$, wherein t is the slot t where SRS transmission is located, T is a period of the SRS transmission, $\lfloor X \rfloor$ represents downward rounding of X; and

different SRS port indices, or different SRS port indices minus a third reference value $n_{ref}$.

In an implementation, determining the offset information based on the pseudo-random sequence function includes:

performing random offset on a cyclic shift parameter of the SRS sequence based on the second pseudo-random sequence function, to obtain cyclic shift offset information;
wherein performing random offset on a cyclic shift parameter of the SRS sequence based on the second pseudo-random sequence function to obtain cyclic shift offset information is represented by at least one of:

$$n_{SRS}^{cs,i} = \begin{cases} \left(n_{SRS}^{cs} + \dfrac{n_{SRS}^{cs,\max} \lfloor (p_i - 1000)/2 \rfloor}{N_{ap}^{SRS}/2} + f_{csh}(n_{s,f}^{\mu}, Y')\right) \bmod \left(I \times n_{SRS}^{cs,\max}\right) & \text{if } N_{ap}^{SRS} = 4 \text{ and } n_{SRS}^{cs,\max} = 6 \\ \left(n_{SRS}^{cs} + \dfrac{n_{SRS}^{cs,\max} \lfloor (p_i - 1000) \rfloor}{N_{ap}^{SRS}} + f_{csh}(n_{s,f}^{\mu}, Y')\right) \bmod \left(I \times n_{SRS}^{cs,\max}\right) & \text{others} \end{cases}$$

or

$$n_{SRS}^{cs,i} = \begin{cases} \left(n_{SRS}^{cs} + \dfrac{n_{SRS}^{cs,\max} \lfloor (p_i - 1000)/2 \rfloor}{N_{ap}^{SRS}/2}\right) \bmod n_{SRS}^{cs,\max} + f_{csh}(n_{s,f}^{\mu}, Y') & \text{if } N_{ap}^{SRS} = 4 \text{ and } n_{SRS}^{cs,\max} = 6 \\ \left(n_{SRS}^{cs} + \dfrac{n_{SRS}^{cs,\max} \lfloor (p_i - 1000) \rfloor}{N_{ap}^{SRS}}\right) \bmod n_{SRS}^{cs,\max} + f_{csh}(n_{s,f}^{\mu}, Y') & \text{others} \end{cases}$$

wherein, $n_{SRS}^{cs,i}$ is the cyclic shift offset information; $N_{ap}^{SRS}$ is a number of ports for SRS resources; $n_{SRS}^{cs}$ is a cyclic shift value configured by a network device; $n_{SRS}^{cs,\mathrm{max}}$ is the maximum number of cyclic shifts configured by the network device; $p_i$ is an antenna port index corresponding to the i-th SRS port; $f_{csh}(n_{s,f}^{\mu}, Y')$ is the second pseudo-random sequence function; $I$ is greater than or equal to 1; mod is a remainder function.

In an implementation, the method further includes: in response to determining that time-frequency domain resources for transmitting the sounding reference signal overlap with time-frequency domain resources for transmitting another sounding reference signal, sending a change indication to the terminal;

wherein the change indication is used to indicate the terminal sending the sounding reference signal to change a comb value offset of the sounding reference signal or change a cyclic shift value of the sounding reference signal; and/or the change indication is used to indicate the terminal sending the other sounding reference signal to change a comb value offset of the other sounding reference signal or change a cyclic shift value of the other sounding reference signal.

According to a third aspect of embodiments of the present disclosure, an apparatus for transmitting a sounding reference signal (SRS) is provided. The apparatus includes:

a determining unit, configured to determine offset information based on a pseudo-random sequence function, wherein the offset information is used to randomize the SRS signal transmitted by the terminal, the pseudo-random sequence function is determined based on identification information, the identification information including a cell identifier of a cell where the terminal is located and/or an identifier of a transmission and reception point corresponding to the terminal; and
a communication unit, configured to transmit the SRS signal based on the offset information.

In an implementation, the pseudo-random sequence function is determined based on at least a random sequence initialization function and a maximum offset value, wherein the maximum offset value includes a comb value of an SRS sequence and/or a maximum number of maximum cyclic shifts;
the random sequence initialization function is determined based on the identification information or based on an SRS resource configuration parameter and the identification information.
In an implementation, the random sequence initialization function satisfies a formula of:

$$C_{init}(N_{ID}) = N_{ID};$$

or

$$C_{init}(N_{ID}) = \left(2^{10}(N_{symb}^{slot}n_{s,f}^{\mu}+1)(2N_{ID}+1)+N_{ID}\right)\mathrm{mod}\,2^{31};$$

wherein, $C_{init}(N_{ID})$ is the random sequence initialization function, $N_{ID}$ is the cell identifier of the cell where the terminal is located and/or the identifier of the transmission and reception point corresponding to the terminal, $N_{symb}^{slot}$ is a number of symbols occupied by the SRS sequence in a slot, and $n_{s,f}^{\mu}$ is a number of slots contained in one radio frame.

In an implementation, the SRS resource configuration parameter includes at least one of:

a number of symbols occupied by the SRS sequence in a slot;
a number of slots occupied by the SRS sequence in a radio frame;
a starting position of transmission of the SRS sequence in a slot; or
an integer value determined based on the maximum offset value.

In an implementation, the offset information includes offset information in SRS comb transmission, and the offset information in SRS comb transmission is used to determine a frequency-domain starting position of the SRS sequence corresponding to each SRS port after offset in one SRS comb transmission;

the maximum offset value is the comb value of the SRS sequence;
the pseudo-random sequence function satisfies a formula of:

$$f_{ch}(n_{s,f}^{\mu}, Y) = \left( \sum_{m=0}^{X} c\left( X(N_{symb}^{slot} n_{s,f}^{\mu} + l_0 + Y) + m \right) \cdot 2^m \right) \bmod K_{TC}$$

wherein, $f_{ch}(n_{s,f}^{\mu}, Y)$ is a first pseudo-random sequence function; $c()$ is a Gold sequence generation function, and an initialization value of the Gold sequence generation function is the random sequence initialization function; $X$ is the comb value of the SRS sequence or an integer multiple of the comb value; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y$ is a first reference value; $m \in \{0,...,X\}$; $K_{TC}$ is the comb value of the SRS sequence; $\sum$ is a sum function; mod is a remainder function.

In an implementation, a value of $Y$ is determined by a linear sum of one or more of:

0;

$$l' \in \left\{0, 1, ..., N_{symb}^{SRS} - 1\right\};$$

a slot t where SRS transmission is located;

an identifier $n_{ID}^{SRS}$ of the SRS sequence;

$N_{ID}$;

$$k' \in \left\{0, 1, ..., K_{TC} - 1\right\};$$

$\lfloor t/T \rfloor$, wherein t is the slot t where SRS transmission is located, T is a period of the SRS transmission, $\lfloor X \rfloor$ represents downward rounding of X.

In an implementation, determining the offset information based on the pseudo-random sequence function includes:
randomizing comb transmission offset parameters of the SRS sequence based on the first pseudo-random sequence function, to obtain the offset information within SRS comb transmission.

In an implementation, the comb transmission offset parameters of the SRS sequence include offset values $k_{TC}^{(p_i)}$ of the SRS sequence corresponding to SRS ports within a comb value, and offset values $k_{offset}^{l'}$ of the SRS sequence at different symbols within a comb value;

randomizing the comb transmission offset parameters of the SRS sequence based on the first pseudo-random sequence function comprises at least one of:

randomizing $k_{TC}^{(p_i)}$ and $k_{offset}^{l'}$ as a whole based on the first pseudo-random sequence function, to obtain the offset information within SRS comb transmission; or

randomizing $k_{TC}^{(p_i)}$ based on the first pseudo-random sequence function, and obtaining the offset information within SRS comb transmission based on randomized $k_{TC}^{(p_i)}$.

In an implementation, randomizing $k_{TC}^{(p_i)}$ and $k_{offset}^{l'}$ as a whole based on the first pseudo-random sequence function to obtain the offset information within SRS comb transmission is represented by:

$$\overline{k}_0^{(p_i)} = n_{shift} N_{sc}^{RB} + (k_{TC}^{(p_i)} + k_{offset}^{l'} + f_{ch}(n_{s,f}^{\mu}, Y)) \bmod K_{TC}$$

wherein, $\overline{k}_0^{(p_i)}$ is an offset within the SRS comb transmission; $n_{shift}$ is an offset position relative to a reference point; $N_{sc}^{RB}$ is a number of subcarriers contained in a resource block (RB); $k_{TC}^{(p_i)}$ is an offset value of the SRS sequence corresponding to the i-th SRS port within a comb value; $p_i$ is an antenna port index corresponding to the i-th SRS port; $k_{offset}^{l'}$ are offset values of the SRS sequence at different symbols within a comb value; $f_{ch}(n_{s,f}^{\mu}, Y)$ is the first pseudo-random sequence function; $K_{TC}$ is the comb value; mod is a remainder function.

In an implementation, randomizing $k_{TC}^{(p_i)}$ based on the first pseudo-random sequence function is represented by:

$$\overline{k}_{TC}^{(p)} = \begin{cases} (\overline{k}_{TC} + K_{TC}/2 + f_{ch}(n_{s,f}^{\mu}, Y)) \bmod K_{TC} & \text{if } N_{ap}^{SRS}=4, \ p_i \in \{1001,1003\} \ \text{and} \ n_{SRS}^{cs,\max}=6 \\ (\overline{k}_{TC} + K_{TC}/2 + f_{ch}(n_{s,f}^{\mu}, Y)) \bmod K_{TC} & \text{if } N_{ap}^{SRS}=4, \ p_i \in \{1001,1003\} \ \text{and} \ n_{SRS}^{cs}= \in \{n_{SRS}^{cs,\max}/2,..., \ n_{SRS}^{cs,\max}-1\} \\ \overline{k}_{TC} + f_{ch}(n_{s,f}^{\mu}, Y) & \text{others} \end{cases}$$

wherein, $\overline{k}_{TC}^{(p_i)}$ is a randomized offset value of the SRS sequence corresponding to the i-th SRS port within a comb value; $\overline{k}_{TC}$ is an offset comb value; $f_{ch}(n_{s,f}^{\mu}, Y)$ is the first pseudo-random sequence function; $K_{TC}$ is the comb value; mod is a remainder function; $N_{ap}^{SRS}$ is a number of ports for SRS resources; $n_{SRS}^{cs}$ is a cyclic shift value configured by a network device; $n_{SRS}^{cs,\max}$ is a maximum number of cyclic shifts configured by the network device.

In an implementation, transmitting the SRS signal based on the offset information includes:

determining a frequency domain position occupied by SRS based on the offset information in SRS comb transmission, a starting position within a specified bandwidth size during partial frequency domain transmission, and a starting position of each hop; and
transmitting the SRS at the frequency domain position determined.

In an implementation, the offset information includes cyclic shift offset information;

the maximum offset value is the maximum number of maximum cyclic shifts;
the pseudo-random sequence function satisfies

$$f_{csh}(n_{s,f}^{\mu}, Y') = \left(\sum_{m=0}^{X'} c\left(X'(N_{symb}^{slot} n_{s,f}^{\mu} + l_0 + Y') + m\right) \cdot 2^m\right) \bmod n_{SRS}^{cs,\max}$$

wherein, $f_{csh}(n_{s,f}^{\mu}, Y')$ is a second pseudo-random sequence function; $c()$ is a Gold sequence generation function, and an initialization value of the Gold sequence generation function is the random sequence initialization function $C_{init}$

($N_{ID}$); $X'$ is an integer value determined by the maximum number of cyclic shifts configured by a network device, which is the maximum number of cyclic shifts, or an integer multiple of the maximum number of cyclic shifts, or the same value as a value generated by a group hop sequence; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y'$ is a second reference value; $m \in \{0,...,X\}$; $n_{SRS}^{cs,max}$ is the maximum number of cyclic shifts configured by the network device; $\Sigma$ is a sum function; mod is a remainder function.

In an implementation, a value of $Y'$ is determined by a linear sum of one or more of:

0;

$$ l' \in \left\{ 0, 1, ..., N_{symb}^{SRS} - 1 \right\}; $$

a slot t where SRS transmission is located;

an identifier $n_{ID}^{SRS}$ of the SRS sequence;

$N_{ID}$;

$$ k' \in \left\{ 0, 1, ..., K_{TC} - 1 \right\}; $$

$\left\lfloor t/T \right\rfloor$, wherein t is the slot t where SRS transmission is located, T is a period of the SRS transmission, $\left\lfloor X \right\rfloor$ represents downward rounding of X; and

different SRS port indices, or different SRS port indices minus a third reference value $n_{ref}$.

In an implementation, determining the offset information based on the pseudo-random sequence function includes:
performing random offset on a cyclic shift parameter of the SRS sequence based on the second pseudo-random sequence function, to obtain cyclic shift offset information.

In an implementation, performing random offset on a cyclic shift parameter of the SRS sequence based on the second pseudo-random sequence function to obtain cyclic shift offset information is represented by at least one of:

$$ n_{SRS}^{cs,i} = \begin{cases} \left( n_{SRS}^{cs} + \dfrac{n_{SRS}^{cs,\max} \left\lfloor (p_i - 1000)/2 \right\rfloor}{N_{ap}^{SRS}/2} + f_{csh}(n_{t,f}^{\mu}, Y') \right) \bmod \left( I \times n_{SRS}^{cs,\max} \right) & \text{if } N_{ap}^{SRS} = 4 \text{ and } n_{SRS}^{cs,\max} = 6 \\[4ex] \left( n_{SRS}^{cs} + \dfrac{n_{SRS}^{cs,\max} \left\lfloor (p_i - 1000) \right\rfloor}{N_{ap}^{SRS}} + f_{csh}(n_{t,f}^{\mu}, Y') \right) \bmod \left( I \times n_{SRS}^{cs,\max} \right) & \text{others} \end{cases} ; $$

or

$$ n_{SRS}^{cs,i} = \begin{cases} \left( n_{SRS}^{cs} + \dfrac{n_{SRS}^{cs,\max} \left\lfloor (p_i - 1000)/2 \right\rfloor}{N_{ap}^{SRS}/2} \right) \bmod n_{SRS}^{cs,\max} + f_{csh}(n_{t,f}^{\mu}, Y') & \text{if } N_{ap}^{SRS} = 4 \text{ and } n_{SRS}^{cs,\max} = 6 \\[4ex] \left( n_{SRS}^{cs} + \dfrac{n_{SRS}^{cs,\max} \left\lfloor (p_i - 1000) \right\rfloor}{N_{ap}^{SRS}} \right) \bmod n_{SRS}^{cs,\max} + f_{csh}(n_{t,f}^{\mu}, Y') & \text{others} \end{cases} $$

wherein, $n_{SRS}^{cs,i}$ is the cyclic shift offset information; $N_{ap}^{SRS}$ is a number of ports for SRS resources; $n_{SRS}^{cs}$ is a cyclic shift value configured by a network device; $n_{SRS}^{cs,max}$ is the maximum number of cyclic shifts configured by the network device; $p_i$ is an antenna port index corresponding to the i-th SRS port; $f_{csh}(n_{s,f}^{\mu}, Y')$ is the second pseudo-random sequence function; $l$ is greater than or equal to 1; mod is a remainder function.

In an implementation, transmitting the SRS signal based on the offset information includes:

generating an SRS random sequence based on the cyclic shift offset information; and
transmitting the SRS random sequence.

In an implementation, the method further includes:

in response to receiving a change indication sent by a network device, changing a comb value offset of the sounding reference signal; or
in response to receiving a change indication sent by a network device, changing a cyclic shift value of the sounding reference signal;
wherein, the change indication is sent by the network device to the terminal when time-frequency domain resources for transmitting the sounding reference signal overlap with time-frequency domain resources for transmitting another sounding reference signal.

According to a fourth aspect of embodiments of the present disclosure, an apparatus for transmitting a sounding reference signal (SRS) is provided. The apparatus includes:

a sending unit, configured to send identification information to a terminal, so that the terminal determines a pseudo-random sequence function based on the identification information, and determines offset information based on the pseudo-random sequence function, wherein the identification information includes a cell identifier of a cell where the terminal is located and/or an identifier of a transmission and reception point corresponding to the terminal; and
a receiving unit, configured to receive the SRS signal determined and transmitted by the terminal based on the offset information.

In an implementation, the sending unit is further configured to:
send an SRS resource configuration parameter to the terminal, so that the terminal determines a random sequence initialization function based on the identification information or based on the SRS resource configuration parameter and the identification information, and determines the pseudo-random sequence function at least based on the random sequence initialization function and a maximum offset value, wherein the maximum offset value includes a comb value of an SRS sequence and/or a maximum number of maximum cyclic shifts.

In an implementation, the random sequence initialization function satisfies a formula of:

$$C_{init}(N_{ID}) = N_{ID};$$

or

$$C_{init}(N_{ID}) = \left(2^{10}(N_{symb}^{slot} n_{s,f}^{\mu} + 1)(2N_{ID} + 1) + N_{ID}\right) \bmod 2^{31};$$

wherein, $C_{init}(N_{ID})$ is the random sequence initialization function, $N_{ID}$ is the cell identifier of the cell where the terminal is located and/or the identifier of the transmission and reception point corresponding to the terminal, $N_{symb}^{slot}$ is a number of symbols occupied by the SRS sequence in a slot, and $n_{s,f}^{\mu}$ is a number of slots occupied by the SRS sequence in a radio frame.

In an implementation, the SRS resource configuration parameter includes at least one of:

a number of symbols occupied by the SRS sequence in a slot;

a number of slots occupied by the SRS sequence in a radio frame;
a starting position of transmission of the SRS sequence in a slot; or
an integer value determined based on the maximum offset value.

In an implementation, the offset information includes offset information in SRS comb transmission, and the offset information in SRS comb transmission is used to determine a frequency-domain starting position of the SRS sequence corresponding to each SRS port after offset in one SRS comb transmission;

the maximum offset value is the comb value of the SRS sequence;
the pseudo-random sequence function satisfies a formula of:

$$f_{ch}(n_{s,f}^{\mu},Y)=\left(\sum_{m=0}^{X}c\left(X(N_{symb}^{slot}n_{s,f}^{\mu}+l_0+Y)+m\right)\cdot 2^m\right)\bmod K_{TC}$$

wherein, $f_{ch}(n_{s,f}^{\mu},Y)$ is a first pseudo-random sequence function; $c()$ is a Gold sequence generation function, and an initialization value of the Gold sequence generation function is the random sequence initialization function; $X$ is the comb value of the SRS sequence or an integer multiple of the comb value; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y$ is a first reference value; $m \in \{0,...,X\}$; $K_{TC}$ is the comb value of the SRS sequence; $\sum$ is a sum function; mod is a remainder function.

In an implementation, a value of $Y$ is determined by a linear sum of one or more of:

0;

$$l' \in \left\{0,1,...,N_{symb}^{SRS}-1\right\}$$;

a slot t where SRS transmission is located;
an identifier $n_{ID}^{SRS}$ of the SRS sequence;
$N_{ID}$;

$$k' \in \left\{0,1,...,\ K_{TC}-1\right\}$$;

$\lfloor t/T \rfloor$, wherein t is the slot t where SRS transmission is located, T is a period of the SRS transmission, $\lfloor X \rfloor$ represents downward rounding of X.

In an implementation, determining the offset information based on the pseudo-random sequence function includes:

randomizing comb transmission offset parameters of the SRS sequence based on the first pseudo-random sequence function, to obtain the offset information within SRS comb transmission;

wherein the comb transmission offset parameters of the SRS sequence include offset values $k_{TC}^{(p_i)}$ of the SRS sequence corresponding to SRS ports within a comb value, and offset values $k_{offset}^{l'}$ of the SRS sequence at different symbols within a comb value;

randomizing the comb transmission offset parameters of the SRS sequence based on the first pseudo-random sequence function includes at least one of:

randomizing $k_{TC}^{(p_i)}$ and $k_{offset}^{l'}$ as a whole based on the first pseudo-random sequence function, to obtain the offset information within SRS comb transmission; or

randomizing $k_{TC}^{(p_i)}$ based on the first pseudo-random sequence function, and obtaining the offset information within SRS comb transmission based on randomized $k_{TC}^{(p_i)}$.

In an implementation, randomizing $k_{TC}^{(p_i)}$ and $k_{offset}^{l'}$ as a whole based on the first pseudo-random sequence function to obtain the offset information within SRS comb transmission is represented by:

$$\overline{k}_0^{(p_i)} = n_{shift} N_{sc}^{RB} + (k_{TC}^{(p_i)} + k_{offset}^{l'} + f_{ch}(n_{s,f}^{\mu}, Y)) \bmod K_{TC}$$

wherein, $\overline{k}_0^{(p_i)}$ is an offset within the SRS comb transmission; $n_{shift}$ is an offset position relative to a reference point; $N_{sc}^{RB}$ is a number of subcarriers contained in a resource block (RB); $k_{TC}^{(p_i)}$ is an offset value of the SRS sequence corresponding to the i-th SRS port within a comb value; $p_i$ is an antenna port index corresponding to the i-th SRS port; $k_{offset}^{l'}$ are offset values of the SRS sequence at different symbols within a comb value; $f_{ch}(n_{s,f}^{\mu}, Y)$ is the first pseudo-random sequence function; $K_{TC}$ is the comb value; mod is a remainder function.

In an implementation, randomizing $k_{TC}^{(p_i)}$ based on the first pseudo-random sequence function is represented by:

$$\overline{k_{TC}^{(p_i)}} = \begin{cases} (\overline{k}_{TC} + K_{TC}/2 + f_{ch}(n_{s,f}^{\mu}, Y)) \bmod K_{TC} & \text{if } N_{ap}^{SRS}=4, \ p_i \in \{1001,1003\} \text{ and } n_{SRS}^{cs,max}=6 \\ (\overline{k}_{TC} + K_{TC}/2 + f_{ch}(n_{s,f}^{\mu}, Y)) \bmod K_{TC} & \text{if } N_{ap}^{SRS}=4, \ p_i \in \{1001,1003\} \text{ and } n_{SRS}^{cs} = \in \{n_{SRS}^{cs,max}/2,.., \ n_{SRS}^{cs,max}-1\} \\ \overline{k}_{TC} + f_{ch}(n_{s,f}^{\mu}, Y) & \text{others} \end{cases}$$

wherein, $\overline{k_{TC}^{(p_i)}}$ is an offset value obtained by randomizing the offset value of the SRS sequence corresponding to the i-th SRS port within a comb value; $\overline{k}_{TC}$ is an offset comb value; $f_{ch}(n_{s,f}^{\mu}, Y)$ is the first pseudo-random sequence function; $K_{TC}$ is the comb value; mod is a remainder function; $N_{ap}^{SRS}$ is a number of ports for SRS resources; $n_{SRS}^{cs}$ is a cyclic shift value configured by a network device; $n_{SRS}^{cs,max}$ is a maximum number of cyclic shifts configured by the network device.

In an implementation, the offset information includes cyclic shift offset information;

the maximum offset value is the maximum number of maximum cyclic shifts;
the pseudo-random sequence function satisfies

$$f_{csh}(n_{s,f}^{\mu}, Y') = \left(\sum_{m=0}^{X'} c\left(X'(N_{symb}^{slot} n_{s,f}^{\mu} + l_0 + Y') + m\right) \cdot 2^m\right) \bmod n_{SRS}^{cs,max}$$

wherein, $f_{csh}(n_{s,f}^{\mu}, Y')$ is a second pseudo-random sequence function; $c()$ is a Gold sequence generation function, and an initialization value of the Gold sequence generation function is the random sequence initialization function $C_{init}$

($N_{ID}$); $X'$ is an integer value determined by the maximum number of cyclic shifts configured by a network device, which is the maximum number of cyclic shifts, or an integer multiple of the maximum number of cyclic shifts, or the same value as a value generated by a group hop sequence; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y'$ is a second reference value; $m \in \{0, ..., X\}$; $n_{SRS}^{cs,max}$ is the maximum number of cyclic shifts configured by the network device; $\Sigma$ is a sum function; mod is a remainder function.

In an implementation, a value of $Y'$ is determined by a linear sum of one or more of:

0;

$$l' \in \left\{0, 1, ..., N_{symb}^{SRS} - 1\right\}$$;

a slot t where SRS transmission is located;

an identifier $n_{ID}^{SRS}$ of the SRS sequence;

$N_{ID}$;

$$k' \in \left\{0, 1, ..., K_{TC}-1\right\}$$;

$\left\lfloor t/T \right\rfloor$, wherein t is the slot t where SRS transmission is located, T is a period of the SRS transmission, $\left\lfloor X \right\rfloor$ represents downward rounding of X; and

different SRS port indices, or different SRS port indices minus a third reference value $n_{ref}$.

In an implementation, determining the offset information based on the pseudo-random sequence function includes:

performing random offset on a cyclic shift parameter of the SRS sequence based on the second pseudo-random sequence function, to obtain cyclic shift offset information;
wherein performing random offset on a cyclic shift parameter of the SRS sequence based on the second pseudo-random sequence function to obtain cyclic shift offset information is represented by at least one of:

$$n_{SRS}^{cs,i} = \begin{cases} \left(n_{SRS}^{cs} + \dfrac{n_{SRS}^{cs,max}\left\lfloor (p_i-1000)/2 \right\rfloor}{N_{ap}^{SRS}/2} + f_{csh}(n_{s,f}^{\mu},Y')\right) \bmod \left(I \times n_{SRS}^{cs,max}\right) & \text{if } N_{ap}^{SRS}=4 \text{ and } n_{SRS}^{cs,max}=6 \\ \left(n_{SRS}^{cs} + \dfrac{n_{SRS}^{cs,max}\left\lfloor (p_i-1000) \right\rfloor}{N_{ap}^{SRS}} + f_{csh}(n_{s,f}^{\mu},Y')\right) \bmod \left(I \times n_{SRS}^{cs,max}\right) & \text{others} \end{cases}$$

or

$$n_{SRS}^{cs,i} = \begin{cases} \left(n_{SRS}^{cs} + \dfrac{n_{SRS}^{cs,max}\left\lfloor (p_i-1000)/2 \right\rfloor}{N_{ap}^{SRS}/2}\right) \bmod n_{SRS}^{cs,max} + f_{csh}(n_{s,f}^{\mu},Y') & \text{if } N_{ap}^{SRS}=4 \text{ and } n_{SRS}^{cs,max}=6 \\ \left(n_{SRS}^{cs} + \dfrac{n_{SRS}^{cs,max}\left\lfloor (p_i-1000) \right\rfloor}{N_{ap}^{SRS}}\right) \bmod n_{SRS}^{cs,max} + f_{csh}(n_{s,f}^{\mu},Y') & \text{others} \end{cases}$$

wherein, $n_{SRS}^{cs,i}$ is the cyclic shift offset information; $N_{ap}^{SRS}$ is a number of ports for SRS resources; $n_{SRS}^{cs}$ is a cyclic shift value configured by a network device; $n_{SRS}^{cs,\max}$ is the maximum number of cyclic shifts configured by the network device; $p_i$ is an antenna port index corresponding to the i-th SRS port; $f_{csh}(n_{s,f}^{\mu}, Y')$ is the second pseudo-random sequence function; $l$ is greater than or equal to 1; mod is a remainder function.

In an implementation, the method further includes: in response to determining that time-frequency domain resources for transmitting the sounding reference signal overlap with time-frequency domain resources for transmitting another sounding reference signal, sending a change indication to the terminal;

wherein the change indication is used to indicate the terminal sending the sounding reference signal to change a comb value offset of the sounding reference signal or change a cyclic shift value of the sounding reference signal; and/or the change indication is used to indicate the terminal sending the other sounding reference signal to change a comb value offset of the other sounding reference signal or change a cyclic shift value of the other sounding reference signal.

According to a fifth aspect of embodiments of the present disclosure, an apparatus for transmitting a sounding reference signal (SRS) is provided. The apparatus includes:

a processor; and
a memory for storing instructions executable by the processor;
wherein the processor is configured to implement the method of the first aspect or any implementation of the first aspect.

According to a sixth aspect of embodiments of the present disclosure, an apparatus for transmitting a sounding reference signal (SRS) is provided. The apparatus includes:

a processor; and
a memory for storing instructions executable by the processor;
wherein the processor is configured to implement the method of the second aspect or any implementation of the second aspect.

According to a seventh aspect of embodiments of the present disclosure, a storage medium is provided. The storage medium stores instructions which, when executed by a processor of a terminal, enable the terminal to implement the method of the first aspect or any implementation of the first aspect.
According to an eighth aspect of embodiments of the present disclosure, a storage medium is provided. The storage medium stores instructions which, when executed by a processor of a network device, enable the network device to implement the method of the second aspect or any implementation of the second aspect.
The technical solution provided by embodiments of the present disclosure may include the following beneficial effects: by determining a pseudo-random sequence function based on identification information including the cell identifier of the cell where the terminal is located and/or the identifier of the transmission and reception point corresponding to the terminal, and randomizing the SRS signal transmitted by the terminal based on the offset information determined by the pseudo-random sequence function, it is possible to avoid interference caused by the offset of SRS of the edge user being the same as that of SRS of the center user, and improve the estimation performance of the uplink channel.
It should be understood that the above general description and the subsequent detailed description are only exemplary and explanatory, and cannot limit this disclosure.

## BRIEF DESCRIPTION OF THE DRAWINGS

The accompanying drawings are incorporated into the specification and form a part of the specification, illustrating embodiments in accordance with the present disclosure and used together with the specification to explain the principles of the present disclosure.

Fig. 1 is a schematic diagram of a wireless communication system according to an exemplary embodiment.
Fig. 2 is a schematic flowchart of a method for transmitting a sounding reference signal (SRS) according to an exemplary embodiment.
Fig. 3 is a schematic flowchart of a method for determining offset information based on a first pseudo-random sequence function when the offset information includes offset information within SRS comb transmission, according to an exemplary embodiment.

Fig. 4 is a schematic flowchart of a method for determining offset information based on a pseudo-random sequence function when the offset information includes cyclic shift offset information, according to an exemplary embodiment.

Fig. 5 is a schematic diagram of a specific application of a method for transmitting a sounding reference signal according to an exemplary embodiment.

Fig. 6 is a schematic flowchart of a method for transmitting a sounding reference signal (SRS) according to an exemplary embodiment.

Fig. 7 is a block diagram of an apparatus for transmitting a sounding reference signal (SRS) according to an exemplary embodiment.

Fig. 8 is a block diagram of an apparatus for transmitting a sounding reference signal (SRS) according to an exemplary embodiment.

Fig. 9 is a block diagram of a device according to an exemplary embodiment.

Fig. 10 is a block diagram of a device according to an exemplary embodiment.

## DETAILED DESCRIPTION

Here, the exemplary embodiments will be described in detail, with examples shown in the accompanying drawings. When referring to the accompanying drawings, unless otherwise indicated, the same numbers in different drawings represent the same or similar elements. The implementations described in the following exemplary embodiments do not represent all implementations consistent with the present disclosure.

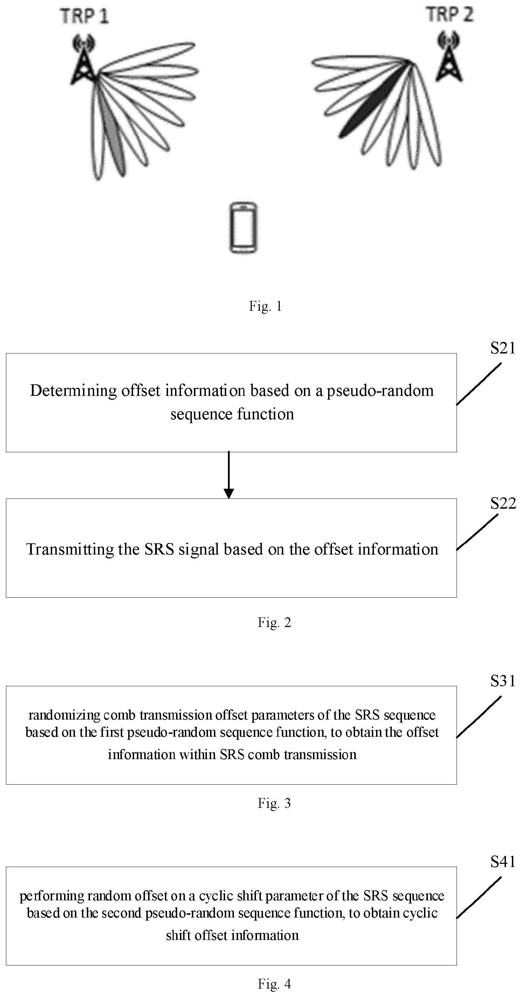

The method for transmitting a sounding reference signal in embodiments of the present disclosure can be applied to the wireless communication system shown in Fig. 1. As shown in Fig. 1, the wireless communication system includes network devices and terminals. The terminal is connected to the network device and performs data transmission through radio resources.

It can be understood that the wireless communication system shown in Fig. 1 is only for illustrative purposes. The wireless communication system may also include other network devices, such as core network devices, wireless relay devices, and wireless backhaul devices, which are not shown in Fig. 1 The number of network devices and terminals included in the wireless communication system is not limited in embodiments of the present disclosure.

It can be further understood that the wireless communication system disclosed in embodiments of the present disclosure is a network that provides wireless communication functionality. The wireless communication system can adopt different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency Division Multiple Access (OFDMA), Single Carrier FDMA (SC-FDMA), and Carrier Sense Multiple Access with Collision Avoidance. According to factors such as capacity, speed, and latency of different networks, they can be divided into 2G (generation) networks, 3G networks, 4G networks, or future evolution networks, such as 5G networks, which can also be referred to as New Radio (NR) networks. For ease of description, wireless communication networks are sometimes referred to as networks in this disclosure.

Further, the network devices referred to in this disclosure may also be referred to as wireless access network devices. The wireless access network device may be a base station, an evolved node B (BS), a home base station, an access point (AP) in a wireless fidelity (WIFI) system, a wireless relay node, a wireless backhaul node, a transmission point (TP) or a transmission and reception point (TRP), etc. It may also be a gNB in an NR system, or a component or part of the equipment that makes up the base station. It should be understood that the specific technology and device form adopted by the network device in embodiments of the present disclosure are not limited. In this disclosure, the network device can provide communication coverage for specific geographic areas and can communicate with terminals located within that coverage area (cell). In addition, when the wireless communication system is a V2X communication system, the network device may also be an in-vehicle device.

Furthermore, the terminal referred to in this disclosure, also known as terminal device, user equipment (UE), mobile station (MS), mobile terminal (MT), etc., is a device that provides voice and/or data connectivity to users. For example, the terminal may be a handheld device with wireless connection function, a vehicle mounted device, etc. At present, some examples of terminals include: mobile phones, customer premise equipment (CPE), pocket computers (PPC), handheld computers, personal digital assistants (PDA), laptops, tablets, wearable devices, or in-vehicle devices. In addition, when it is a V2X communication system, the terminal may also be a vehicle-mounted device. It should be understood that the specific technology and device form adopted by the terminal is not limited in embodiments of the present disclosure.

In the related art, when the network device (such as base station) has multiple TRPs, M-TRP/multi panel can be used to provide services to terminals, and CoMP technology is introduced, so that the network device can achieve more balanced service quality within the service area.

Unlike single point transmission such as a single TRP or panel (Pannel), coordinated multiple points transmission refers to multiple TRPs (Muplti-TRP, mTRP)/panels providing data services to a user. An antenna array of each TRP can be divided into several relatively independent antenna panels, so the shape and number of ports of the entire array can be flexibly adjusted according to deployment scenarios and business requirements. The antenna panels or TRPs can also be connected by optical fibers for more flexible distributed deployment. In the millimeter wave band, as the wavelength decreases, the blocking effect caused by obstacles such as human bodies or vehicles will become more significant. In this case, from the perspective of ensuring the robustness of the link connection, cooperation between multiple TRPs or panels can be utilized to transmit/receive from multiple beams at multiple angles, thereby reducing the adverse effects of blocking effects.

According to the mapping relationship between the transmitted signal streams and multiple TRPs/panels, coordinated multiple points transmission technology can be divided into two types: coherent joint transmission (CJT) and non-coherent joint transmission (NCJT). During coherent transmission, each data stream will be mapped onto the multiple TRPs/panels participating in cooperation through weighted vectors. In contrast, during the coherent transmission, each data stream is only mapped to a portion of the TRPs/panels. The coherent transmission is equivalent to concatenating multiple subarrays into a higher dimensional virtual array to obtain higher shaping or precoding gains.

When using CJT transmission in TDD systems, the coordinated multiple TRPs (mTRP) need to obtain accurate uplink channel information of edge users. The uplink channel from the current user to mTRP can be estimated by sending SRS to each TRP through UE. The formula for generating an SRS sequence is:

$$r^{(p_i)}(n,l') = r_{u,v}^{(\alpha_i,\delta)}(n) \tag{1}$$

wherein, $p_i$ is an antenna port index corresponding to the i-th SRS port; $n$ is an index in a length of the SRS sequence $M_{sc,b}^{SRS}$, $0 \leq n \leq M_{sc,b}^{SRS}-1$; $M_{sc,b}^{SRS}$ is the length of the SRS sequence; is an index in a total number of SRS symbols $N_{symb}^{SRS}$; $N_{symb}^{SRS}$ is the total number of SRS symbols; $r_{u,v}^{(\alpha_i,\delta)}(n)$ is an SRS sequence generation formula; u is a serial number of an SRS sequency group; v is a base sequence in each sequence group with v=1 or v=1; $\alpha_i$ is a cyclic phase offset value of the $p_i$-th port; $\delta=\log_2(K_{TC})$; $K_{TC}$ is a comb value, $K_{TC} \in \{2, 4, 8\}$.

The cyclic phase offset value $\alpha_i$ of the $p_i$-th port can be represented as:

$$\alpha_i = 2\pi \frac{n_{SRS}^{cs,i}}{n_{SRS}^{cs,\max}} \tag{2}$$

wherein, $n_{SRS}^{cs,i}$ is cyclic shift offset information, $n_{SRS}^{cs,\max}$ is a maximum number of cyclic shifts configured by a network device,

$$n_{SRS}^{cs,i} = \begin{cases} \left(n_{SRS}^{cs} + \frac{n_{SRS}^{cs,\max}\left\lfloor (p_i-1000)/2 \right\rfloor}{N_{ap}^{SRS}/2}\right) \bmod n_{SRS}^{cs,\max} & \text{if } N_{ap}^{SRS}=4 \text{ and } n_{SRS}^{cs,\max}=6 \\ \left(n_{SRS}^{cs} + \frac{n_{SRS}^{cs,\max}\left\lfloor (p_i-1000) \right\rfloor}{N_{ap}^{SRS}}\right) \bmod n_{SRS}^{cs,\max} & \text{others} \end{cases} \tag{3}$$

$n_{SRS}^{cs}$ is a cyclic shift value configured by the network device, $n_{SRS}^{cs} \in \{0,1,..., n_{SRS}^{cs,\max}-1\}$, $N_{ap}^{SRS}$ is a number of ports for SRS resources, mod is a remainder function.

The maximum number of cyclic shifts $n_{SRS}^{cs,\max}$ can be a function of the comb value $K_{TC}$, and the correspondence relationship between the two can be as shown in Table 1:

| Table 1: correspondence relationship between $n_{SRS}^{cs,max}$ and $K_{TC}$ | |
| --- | --- |
| $K_{TC}$ | $n_{SRS}^{cs,max}$ |
| 2 | 8 |
| 4 | 12 |
| 8 | 6 |

The transmission position of the generated SRS sequence in the frequency domain can be represented as:

$$k_0^{(p_i)} = \overline{k}_0^{(p_i)} + n_{offset}^{FH} + n_{offset}^{RPFS} \qquad (4)$$

wherein,

$$\overline{k}_0^{(p_i)} = n_{shift}N_{sc}^{RB} + (k_{TC}^{(p_i)} + k_{offset}^{l'}) \bmod K_{TC} \qquad (5)$$

$k_0^{(p_i)}$ is the frequency domain starting position of the SRS sequence sent by the corresponding SRS port with the antenna port index $p_i$; $\overline{k}_0^{(p_i)}$ is the offset within the SRS comb transmission, used to determine the frequency domain starting position of the SRS sequence corresponding to each SRS port after offset within one SRS comb transmission; $n_{offset}^{FH}$ represents the starting position of each hop; $n_{offset}^{RPFS}$ represents the starting position within the bandwidth $m_{SRS,b}$ during partial frequency transmission; $m_{SRS,b}$ represents the SRS transmission bandwidth when SRS is not transmitted using frequency hopping, or the bandwidth of each hop when SRS is transmitted using frequency hopping; $b$ is the parameter value configured by the network device to determine whether to use frequency hopping or the parameter value for transmitting the SRS using frequency hopping; is the offset position relative to the reference point configured by the network device; $n_{shift}$ is the number of subcarriers contained in one RB; $N_{sc}^{RB}$ is the offset value of the SRS sequence corresponding to the i-th SRS port within one comb value; $k_{TC}^{(p_i)}$ is the offset value of the SRS sequence at different symbols within a comb value; $k_{offset}^{l'}$ is the offset values of SRS resources for positioning at different symbols within a comb transmission. $k_{TC}^{(p_i)}$ may be determined by the formula of

$$k_{TC}^{(p_i)} = \begin{cases} (\overline{k}_{TC} + K_{TC}/2) \bmod K_{TC} & \text{if } N_{ap}^{SRS} = 4, \quad p_i \in \{1001,1003\} \text{ and } n_{SRS}^{cs,max} = 6 \\ (\overline{k}_{TC} + K_{TC}/2) \bmod K_{TC} & \text{if } N_{ap}^{SRS} = 4, \quad p_i \in \{1001,1003\} \text{ and } n_{SRS}^{cs} = \in \{n_{SRS}^{cs,max}/2,..., \quad n_{SRS}^{cs,max} - 1\} \\ \overline{k}_{TC} & \text{others} \end{cases}$$

$$(6)$$

wherein, $\overline{k}_{TC}$ is the offset comb value, $\overline{k}_{TC} \in \{0,1,..., K_{TC}-1\}$; $N_{ap}^{SRS}$ is the number of ports for SRS resources, and is configured by the network device to the terminal.

The time domain position of the generated SRS sequence transmitted in one slot may be represented as:

$$l_0 = N_{symb}^{slot} - 1 - l_{offset} \qquad (7)$$

wherein, $l_0$ is the starting position of the SRS symbol in a slot; $N_{symb}^{slot}$ is the number of SRS symbols in a slot; $l_{offset}$ is the offset value of the SRS symbol in a slot, $l_{offset} \in \{0,1,...,13\}$, and is configured by the network device to the terminal through a Radio Resource Control (RRC) signaling.

Due to the interference of SRS transmission from cell center users of neighboring cells to SRS transmission from cell edge users, the performance of uplink channel estimation deteriorates. In order to randomize SRS interference from neighboring cells, comb value offset frequency hopping scheme and cyclic shift frequency hopping scheme has been proposed in the related art. In the comb value offset frequency hopping scheme, the formula of calculating $\overline{k}_0^{(p_i)}$ is modified to:

$$\overline{k}_0^{(p_i)} = n_{shift} N_{sc}^{RB} + (k_{TC}^{(p_i)} + k_{offset}^{l'} + f_{ch}(n_{s,f}^{\mu}, l')) \bmod K_{TC} \qquad (8)$$

wherein, $f_{ch}(n_{s,f}^{\mu}, l')$ is the random sequence, and is a function of $l'$. In the cyclic shift frequency hopping scheme, the formula of calculating is modified to:

$$\alpha_i = 2\pi \frac{n_{SRS}^{cs,i}}{n_{SRS}^{cs,max}} + 2\pi \frac{n_{SRS}^{cs,random}}{n_{SRS}^{cs,max}} \qquad (9)$$

wherein,

$$n_{SRS}^{cs,random} \in \left\{0,1,..., \quad n_{SRS}^{cs,max} - 1\right\}$$

or

$$\alpha_i = 2\pi \frac{n_{SRS}^{cs,i}}{n_{SRS}^{cs,max}} + 2\pi \frac{n_{SRS}^{cs,random}}{K \times n_{SRS}^{cs,max}} \qquad (10)$$

wherein,

$$n_{SRS}^{cs,random} \in \left\{0,1,..., \quad K \times n_{SRS}^{cs,max} - 1\right\},$$

and K is a positive integer.

By using this method, the frequency domain transmission position or cyclic shift value of the SRS transmitted by the terminal can be randomized, thereby reducing the interference of SRS transmission by the central user on SRS transmission by the edge user. However, when performing randomization in the above method, the random sequence is generated based on $l'$, which may result in the offset of SRS from the edge user being the same as that of SRS from the center user. In this case, the SRS transmission of the center user will still interfere with the SRS transmission of the edge user.

In view of this, the present disclosure provides a method for transmitting a sounding reference signal (SRS). In this method, a terminal determines identification information based on the cell identifier of the cell where the terminal is located and/or the identifier of the transmission and reception point corresponding to the terminal. Based on the identification information, a pseudo-random sequence function is determined. Based on the pseudo-random sequence function, the offset information of the SRS is determined, and the SRS is transmitted based on the offset information, so that the frequency domain transmission position or cyclic shift value of the SRS from the cell edge user has a different offset from the frequency domain transmission position or cyclic shift value of the SRS from the cell center user of the neighboring cell, thereby reducing the interference of the SRS transmission of the center user on the SRS transmission of the edge UE.

Fig. 2 is a schematic flowchart of a method for transmitting a sounding reference signal (SRS) according to an exemplary embodiment. The method is performed by a terminal, and as shown in Fig. 2, the method includes the following steps.

In step S21, offset information is determined based on a pseudo-random sequence function.

The offset information is used for interference randomization for the SRS signal transmitted by the terminal. The pseudo-random sequence function is determined based on identification information. In some implementations, the pseudo-random sequence function can also be determined by other information, such as the slot in which SRS transmission is located. The identification information includes the cell identifier of the cell where the terminal is located and/or the identifier of the transmission and reception point corresponding to the terminal.

In step S22, the SRS signal is transmitted based on the offset information.

In an embodiment of the present disclosure, the identification information may be sent from the network device to the terminal, and the identification information may include the cell identifier of the cell where the terminal is located, the identifier of the transmission and reception point corresponding to the terminal, or a combination of both.

In an embodiment of the present disclosure, the offset information can be used to randomize the SRS signal transmitted by the terminal, in order to obtain the frequency domain transmission position or cyclic shift value of the SRS transmitted by the terminal after randomization, thereby achieving interference randomization between SRS transmitted by different terminals in neighboring cells.

According to the technical solution of embodiments of the present disclosure, by determining a pseudo-random sequence function based on the identification information including the cell identifier of the cell where the terminal is located and/or the identification information of the transmission and reception point corresponding to the terminal, and randomizing the SRS signal transmitted by the terminal based on the offset information determined by the pseudo-random sequence function, it is possible to avoid interference caused by the offset of SRS of the edge user being the same as that of SRS of the center user, and improve the estimation performance of the uplink channel.

In an embodiment of the present disclosure, the pseudo-random sequence function is determined based on at least the random sequence initialization function $C_{init}(N_{ID})$ and the maximum offset value. The random sequence initialization function $C_{init}(N_{ID})$ is determined based on the identification information, or based on the SRS resource configuration parameter and the identification information. The random sequence initialization function $C_{init}()$ satisfies the following formula:

$$C_{init}(N_{ID}) = N_{ID} \qquad (11)$$

wherein, $N_{ID}$ is the cell identifier of the cell where the terminal is located and/or the identifier of the transmission and reception point corresponding to the terminal; or, the random sequence initialization function $C_{init}(N_{ID})$ satisfies the following formula:

$$C_{init}(N_{ID}) = \left(2^{10}(N_{symb}^{slot}n_{s,f}^{\mu}+1)(2N_{ID}+1) + N_{ID}\right) \bmod 2^{31} \qquad (12)$$

wherein, $N_{symb}^{slot}$ is a number of symbols occupied by the SRS sequence in a slot, and $n_{s,f}^{\mu}$ is a number of slots contained in one radio frame. It can be understood that in practical applications, $C_{init}(N_{ID})$ can also be determined through other means while satisfying the conditions based on the identification information, which will not be elaborated here.

In an embodiment of the present disclosure, when determining the random sequence initialization function based on the SRS resource configuration parameter and the identification information, the SRS resource configuration parameter can be sent by the network device to the terminal. The SRS resource configuration parameter may include at least one of the following:

a number of symbols occupied by the SRS sequence in a slot;
a number of slots occupied by the SRS sequence in a radio frame;
a starting position of transmission of the SRS sequence in a slot; or
an integer value determined based on the maximum offset value.

**EP 4 614 907 A1**

In an embodiment of the present disclosure, the offset information may include offset information in SRS comb transmission, and the offset information in SRS comb transmission may be used to determine a frequency domain starting position of the SRS sequence corresponding to each SRS port after offset in one SRS comb transmission. In this case, the maximum offset value is the comb value of the SRS sequence, and the pseudo-random sequence function satisfies the following formula:

$$f_{ch}(n_{s,f}^{\mu}, Y) = \left( \sum_{m=0}^{X} c \left( X(N_{symb}^{slot} n_{s,f}^{\mu} + l_0 + Y) + m \right) \cdot 2^m \right) \bmod K_{TC}$$

(13)

wherein, $f_{ch}(n_{s,f}^{\mu}, Y)$ is a first pseudo-random sequence function; $c()$ is a Gold sequence generation function, and an initialization value of the Gold sequence generation function is the random sequence initialization function; $X$ is the comb value of the SRS sequence or an integer multiple of the comb value; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y$ is a first reference value; $m \in \{0,...,X\}$; $K_{TC}$ is the comb value of the SRS sequence; $\Sigma$ is a sum function; mod is a remainder function.

In the method for transmitting a sounding reference signal provided in embodiments of the present disclosure, the first pseudo-random sequence function $f_{ch}(n_{s,f}^{\mu}, Y)$ is determined based on the Gold sequence generation function $c$(). The initialization value of the Gold sequence generation function $c()$ is the random sequence initialization function $C_{init}$ $(N_{ID})$, which is determined based on the cell identifier of the cell where the terminal is located and/or the identifier of the transmission and reception point corresponding to the terminal. By using this method, the first pseudo-random sequence function obtained can distinguish different $N_{ID}$, so that terminals in different cells can obtain different first pseudo-random sequence functions for randomizing the transmission comb offset when determining the transmission comb offset of SRS, thereby avoiding interference between SRS transmitted by terminals in different cells.

In an embodiment, the first reference value $Y$ may be determined by a linear sum of one or more of:

0;

$$l' \in \left\{ 0, 1, ..., N_{symb}^{SRS} - 1 \right\};$$

a slot t where SRS transmission is located;

an identifier $n_{ID}^{SRS}$ of the SRS sequence;

$N_{ID}$;

an index within a transmission comb value $k'$, $k' \in \{0,1,..., K_{TC}-1\}$;

$\lfloor t/T \rfloor$, wherein t is the slot t where SRS transmission is located, T is a period of the SRS transmission, $\lfloor X \rfloor$ represents downward rounding of X.

Fig. 3 is a schematic flowchart of a method for determining offset information based on a first pseudo-random sequence function when the offset information includes offset information within SRS comb transmission, according to an exemplary embodiment. As shown in Fig. 3, when the offset information includes the offset information within the SRS comb transmission, the method of determining the offset information based on the first pseudo-random sequence function includes the following steps.

In step S31, comb transmission offset parameters of the SRS sequence are randomized based on the first pseudo-random sequence function, to obtain the offset information within SRS comb transmission.

In an embodiment of the present disclosure, when the offset information includes the offset information within the SRS comb transmission, the pseudo-random sequence function may be the aforementioned first pseudo-random sequence function $f_{ch}(n_{s,f}^{\mu}, Y)$. By applying the first pseudo-random sequence function $f_{ch}(n_{s,f}^{\mu}, Y)$ to the comb transmission offset parameters of the SRS sequence, and randomizing the comb transmission offset parameters of the SRS sequence based on this first pseudo-random sequence function $f_{ch}(n_{s,f}^{\mu},Y)$, the offset information within the SRS comb transmission can be obtained.

In an embodiment of the present disclosure, the comb transmission offset parameters of the SRS sequence may include the offset values $k_{TC}^{(p_i)}$ of the SRS sequence corresponding to the SRS ports within a comb value, and the offset values $k_{offset}^{l'}$ of the SRS sequence at different symbols within a comb value. In this case, in one example, randomizing the comb transmission offset parameters of the SRS sequence based on the first pseudo-random sequence function $f_{ch}(n_{s,f}^{\mu},Y)$ can be achieved by using the following method: randomizing $k_{TC}^{(p_i)}$ and $k_{offset}^{l'}$ as a whole based on the first pseudo-random sequence function, to obtain the offset information within SRS comb transmission. In another example, randomizing the comb transmission offset parameters of the SRS sequence based on the first pseudo-random sequence function $f_{ch}(n_{s,f}^{\mu},Y)$ can be achieved by using the following method: randomizing $k_{TC}^{(p_i)}$ based on the first pseudo-random sequence function $f_{ch}(n_{s,f}^{\mu},Y)$, and obtaining the offset information within SRS comb transmission based on randomized $k_{TC}^{(p_i)}$. In yet another example, randomizing the comb transmission offset parameters of the SRS sequence based on the first pseudo-random sequence function $f_{ch}(n_{s,f}^{\mu},Y)$ can be achieved by using a combination of the two methods mentioned above.

In an embodiment of the present disclosure, randomizing $k_{TC}^{(p_i)}$ and $k_{offset}^{l'}$ as a whole based on the first pseudo-random sequence function $f_{ch}(n_{s,f}^{\mu},Y)$ may be jointly determining the offset information within the SRS comb transmission using the first pseudo-random sequence function $f_{ch}(n_{s,f}^{\mu},Y)$, $k_{TC}^{(p_i)}$, and $k_{offset}^{l'}$, the specific calculation formula of which may be:

$$\overline{k}_0^{(p_i)} = n_{shift} N_{sc}^{RB} + (k_{TC}^{(p_i)} + k_{offset}^{l'} + f_{ch}(n_{s,f}^{\mu},Y)) \bmod K_{TC} \qquad (14)$$

wherein, $\overline{k}_0^{(p_i)}$ is an offset within the SRS comb transmission, that is the randomized frequency domain starting position of the SRS sequence corresponding to each SRS port after being offset within one SRS comb transmission; $n_{shift}$ is an offset position relative to a reference point; $N_{sc}^{RB}$ is a number of subcarriers contained in a resource block (RB); $k_{TC}^{(p_i)}$ is an offset value of the SRS sequence corresponding to the i-th SRS port within a comb value; $p_i$ is an antenna port index corresponding to the i-th SRS port; $k_{offset}^{l'}$ are offset values of the SRS sequence at different symbols within a comb value; $f_{ch}(n_{s,f}^{\mu},Y)$ is the first pseudo-random sequence function; $K_{TC}$ is the comb value; mod is a remainder function.

According to the technical solution of embodiments of the present disclosure, by randomizing the offsets within the SRS comb transmission based on the first pseudo-random sequence function $f_{ch}(n_{s,f}^{\mu},Y)$, $k_{TC}^{(p_i)}$, and $k_{offset}^{l'}$, SRS transmitted by different terminals can have different frequency domain transmission positions, thereby improving the estimation performance of the uplink channel.

In an embodiment of the present disclosure, randomizing $k_{TC}^{(p_i)}$ based on the first pseudo-random sequence function $f_{ch}(n_{s,f}^{\mu},Y)$ and obtaining the offset information within SRS comb transmission based on randomized $k_{TC}^{(p_i)}$ may include: first, determining the randomized $k_{TC}^{(p_i)}$ base on the formula of

$$\overline{k_{TC}^{(p)}} = \begin{cases} (\overline{k}_{TC} + K_{TC}/2 + f_{ch}(n_{s,f}^\mu, Y)) \bmod K_{TC} & \text{if } N_{ap}^{SRS} = 4, \ p_i \in \{1001,1003\} \text{ and } n_{SRS}^{cs,max} = 6 \\ (\overline{k}_{TC} + K_{TC}/2 + f_{ch}(n_{s,f}^\mu, Y)) \bmod K_{TC} & \text{if } N_{ap}^{SRS} = 4, \ p_i \in \{1001,1003\} \text{ and } n_{SRS}^{cs} = \in \{n_{SRS}^{cs,max}/2, ..., \ n_{SRS}^{cs,max} - 1\} \\ \overline{k}_{TC} + f_{ch}(n_{s,f}^\mu, Y) & \text{others} \end{cases}$$

$$(15)$$

wherein, $\overline{k_{TC}^{(p_i)}}$ is the randomized , that is the randomized offset value of the SRS sequence corresponding to the i-th SRS port within a comb value; $\overline{k}_{TC}$ is an offset comb value; $f_{ch}(n_{s,f}^\mu, Y)$ is the first pseudo-random sequence function; $K_{TC}$ is the comb value; mod is a remainder function; $N_{ap}^{SRS}$ is a number of ports for SRS resources; $n_{SRS}^{cs}$ is a cyclic shift value configured by a network device; $n_{SRS}^{cs,max}$ is a maximum number of cyclic shifts configured by the network device; and then, replacing $k_{TC}^{(p_i)}$ in formula (5) with $\overline{k_{TC}^{(p_i)}}$, the offset within the SRS comb transmission is obtained, that is, the randomized frequency domain starting position $\overline{k_0^{(p_i)}}$ of the SRS sequence corresponding to each SRS port in one SRS comb transmission after being offset is:

$$\overline{k}_0^{(p_i)} = n_{shift} N_{sc}^{RB} + (k_{TC}^{(p_i)} + k_{offset}^{l'}) \bmod K_{TC} \qquad (16).$$

According to the technical solution of embodiments of the present disclosure, by first randomizing $k_{TC}^{(p_i)}$ based on the first pseudo-random sequence function $f_{ch}(n_{s,f}^\mu, Y)$ to obtain $\overline{k_{TC}^{(p_i)}}$, and then determining the offset within the SRS comb transmission based on $\overline{k_{TC}^{(p_i)}}$, it is also possible to make the SRS of different terminals have different frequency domain transmission positions, thereby improving the estimation performance of the uplink channel.

In an embodiment of the present disclosure, after determining the offset within the SRS comb transmission, the frequency domain position occupied by the SRS can be determined based on the offset information within the SRS comb transmission, the starting position within a specified bandwidth size during partial frequency domain transmission, and the starting position of each hop. Afterwards, the terminal can transmit the SRS at the determined frequency domain position. In one example, the frequency domain position occupied by SRS can be determined by the aforementioned formula (4), where the offset $\overline{k_0^{(p_i)}}$ within the SRS comb transmission parameter can be replaced by the randomized $\overline{k_0^{(p_i)}}$.

According to the technical solution in embodiments of the present disclosure, by randomizing the offset information $\overline{k_0^{(p_i)}}$ within the SRS comb transmission, the SRS of different terminals has different frequency domain transmission positions, improving the transmission accuracy of SRS sequences and enhancing the estimation capability of the uplink channel.

In an embodiment of the present disclosure, the offset information may further include cyclic shift offset information, which can be used to determine the cyclic shift value of SRS. In this case, the maximum offset is the maximum number of cyclic shifts, and the pseudo-random sequence function satisfies the following formula:

$$f_{csh}(n_{s,f}^\mu, Y') = \left( \sum_{m=0}^{X'} c \left( X'(N_{symb}^{slot} n_{s,f}^\mu + l_0 + Y') + m \right) \cdot 2^m \right) \bmod n_{SRS}^{cs,max} \qquad (17)$$

wherein, $f_{csh}(n_{s,f}^\mu, Y')$ is a second pseudo-random sequence function; $c()$ is a Gold sequence generation function, and an initialization value of the Gold sequence generation function is the random sequence initialization function $C_{init}(N_{ID})$; $X'$ is an integer value determined by the maximum number of cyclic shifts configured by the network device, which is the maximum number of cyclic shifts, or an integer multiple of the maximum number of cyclic shifts, or the same value as a value generated by a group hop sequence; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y'$ is a second reference value; $m \in \{0, ..., X\}$ $n_{SRS}^{cs,max}$ is the maximum number of cyclic shifts configured by the network device; $\sum$ is a sum function; mod is a remainder function.

In the method for transmitting a sounding reference signal provided in embodiments of the present disclosure, the second pseudo-random sequence function $f_{csh}(n_{s,f}^{\mu}, Y')$ is determined based on the Gold sequence generation function $c()$. The initialization value of the Gold sequence generation function $c()$ is the random sequence initialization function $C_{init}(N_{ID})$, which is determined based on the cell identifier of the cell where the terminal is located and/or the identifier of the transmission and reception point corresponding to the terminal. By using this method, the obtained second pseudo-random sequence function $f_{csh}(n_{s,f}^{\mu}, Y')$ can distinguish different $N_{ID}$, so that the terminals in different cells can obtain different second pseudo-random sequence functions $f_{csh}(n_{s,f}^{\mu}, Y')$ for randomizing the cyclic shift value of SRS when determining the cyclic shift value, thereby avoiding interference between SRS transmitted by terminals in different cells.

In an embodiment of the present disclosure, the second reference value $Y'$ may be determined by a linear sum of one or more of:

0;

an index $l'$ within the total number $N_{symb}^{SRS}$ of SRS symbols, $l' \in \{0, 1, ..., N_{symb}^{SRS} - 1\}$;

a slot t where SRS transmission is located;

an identifier $n_{ID}^{SRS}$ of the SRS sequence;

$N_{ID}$;

an index $k'$ within one transmission comb value, $k' \in \{0, 1, ..., K_{TC}-1\}$;

$\lfloor t/T \rfloor$, wherein t is the slot t where SRS transmission is located, T is a period of the SRS transmission, $\lfloor X \rfloor$ represents downward rounding of X; and

different SRS port indices, or different SRS port indices minus a third reference value $n_{ref}$.

Fig. 4 is a schematic flowchart of a method for determining offset information based on a pseudo-random sequence function when the offset information includes cyclic shift offset information, according to an exemplary embodiment. As shown in Fig. 4, when the offset information includes cyclic shift offset information, the method of determining the offset information based on a pseudo-random sequence function includes the following steps.

In step S41, random offset is performed on a cyclic shift parameter of the SRS sequence based on the second pseudo-random sequence function, to obtain cyclic shift offset information.

In an embodiment of the present disclosure, when the offset information includes cyclic shift offset information, the pseudo-random sequence function may be the aforementioned second pseudo-random sequence function $f_{csh}(n_{s,f}^{\mu}, Y')$. Applying the second pseudo-random sequence function $f_{csh}(n_{s,f}^{\mu}, Y')$ to the cyclic shift parameter of SRS resources, and randomizing the cyclic shift parameter of SRS resources based on this second pseudo-random sequence function $f_{csh}(n_{s,f}^{\mu}, Y')$ can obtain the cyclic shift offset information of SRS.

In an embodiment of the present disclosure, performing random offset on a cyclic shift parameter of the SRS sequence based on the second pseudo-random sequence function to obtain cyclic shift offset information may be achieved by the following method: obtaining the cyclic shift offset information based on the formula of

$$n_{SRS}^{cs,i} = \begin{cases} \left( n_{SRS}^{cs} + \dfrac{n_{SRS}^{cs,\max} \lfloor (p_i - 1000)/2 \rfloor}{N_{ap}^{SRS}/2} + f_{csh}(n_{s,f}^{\mu}, Y') \right) \bmod \left( I \times n_{SRS}^{cs,\max} \right) & \text{if } N_{ap}^{SRS} = 4 \text{ and } n_{SRS}^{cs,\max} = 6 \\[3mm] \left( n_{SRS}^{cs} + \dfrac{n_{SRS}^{cs,\max} \lfloor (p_i - 1000) \rfloor}{N_{ap}^{SRS}} + f_{csh}(n_{s,f}^{\mu}, Y') \right) \bmod \left( I \times n_{SRS}^{cs,\max} \right) & \text{others} \end{cases} \tag{18}$$

or the formula of

$$n_{SRS}^{cs,i} = \begin{cases} \left( n_{SRS}^{cs} + \dfrac{n_{SRS}^{cs,\max} \lfloor (p_i - 1000)/2 \rfloor}{N_{ap}^{SRS}/2} \right) \bmod n_{SRS}^{cs,\max} + f_{csh}(n_{s,f}^{\mu}, Y') & \text{if } N_{ap}^{SRS} = 4 \text{ and } n_{SRS}^{cs,\max} = 6 \\[3mm] \left( n_{SRS}^{cs} + \dfrac{n_{SRS}^{cs,\max} \lfloor (p_i - 1000) \rfloor}{N_{ap}^{SRS}} \right) \bmod n_{SRS}^{cs,\max} + f_{csh}(n_{s,f}^{\mu}, Y') & \text{others} \end{cases} \tag{19}$$

wherein, $n_{SRS}^{cs,i}$ is the cyclic shift offset information, that is, the randomized cyclic shift value; $N_{ap}^{SRS}$ is a number of ports for SRS resources; $n_{SRS}^{cs}$ is the cyclic shift value configured by the network device; $n_{SRS}^{cs,\max}$ is the maximum number of cyclic shifts configured by the network device; $p_i$ is an antenna port index corresponding to the i-th SRS port; $f_{csh}(n_{s,f}^{\mu}, Y')$ is the second pseudo-random sequence function; $I$ is greater than or equal to 1; mod is a remainder function.

According to the technical solution of embodiments of the present disclosure, by determining the cyclic shift offset information based on the second pseudo-random sequence function $f_{csh}(n_{s,f}^{\mu}, Y')$, that is, the randomized cyclic shift value, the SRS of different terminals can have different cyclic shift values, which improves the estimation performance of the uplink channel.

In an embodiment of the present disclosure, after determining the cyclic shift offset information, an SRS sequence can be generated based on the cyclic shift offset information and transmitted by the terminal. In one example, an SRS random sequence can be generated using the aforementioned formula (1), where the parameter $n_{SRS}^{cs}$ can be replaced with the cyclic shift offset information $n_{SRS}^{cs}$ that has been randomized as described above when calculating the parameter $\alpha_i$.

According to the technical solution in embodiments of the present disclosure, by randomizing the cyclic shift offset information $n_{SRS}^{cs}$, that is, the cyclic shift value, the SRS of different terminals has different cyclic shift values, which improves the estimation performance of the uplink channel.

In embodiments of the present disclosure, taking the offset information within the SRS comb transmission as an example, the process of transmitting SRS by two terminals is illustrated.

Assuming that terminal UE1 is an edge user within cell 1, terminal UE2 is the center user within cell 2, and cell 1 and cell 2 are neighboring cells. The network device within the cell, such as the base station, configures cell IDs of 5 and 6 for UE1 and UE2, are, respectively. The base station has configured two port periods of SRS resources for UE1 and UE2, namely SRS resource 1 and SRS resource 2, with a period of T=5ms. The comb values of the SRS resources are both set to 4, and the number of OFDM symbols $N_{symb}^{SRS}$ is 1. The numerical offset values of these two resources are configured within a comb transmission range as $\bar{k}_{TC}$ = 0. Due to the configured SRS being a non positioning SRS, $k_{offset}^{l'} = 0$. From the above, the first pseudo-random sequence functions of UE1 and UE2 can be calculated:

$$f_{ch}(n_{s,f}^{\mu}, Y) = \left( \sum_{m=0}^{4} c\left( 4(N_{symb}^{slot} n_{s,f}^{\mu} + l_0 + Y) + m \right) \cdot 2^m \right) \bmod 4 \tag{20};$$

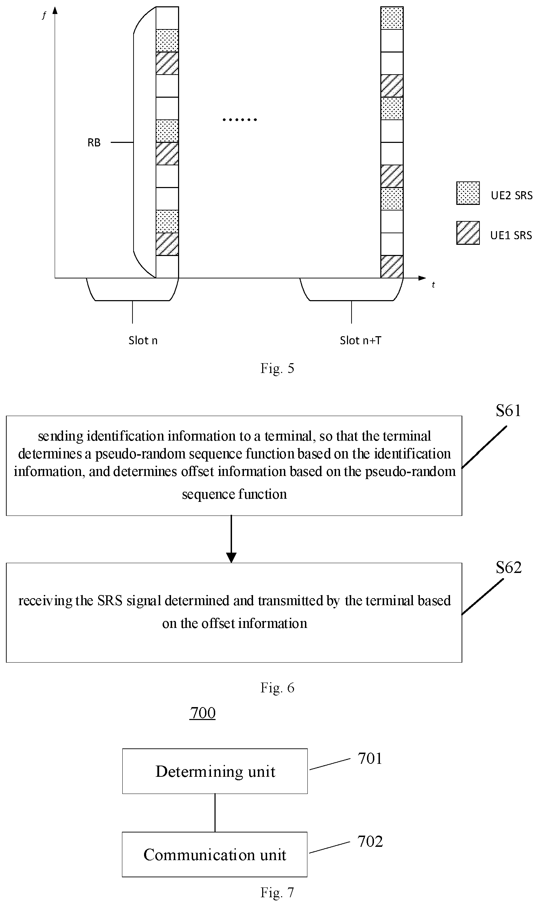

the random sequence initialization function for UE1 is determined as $C_{init}(N_{ID})=5$ and the random sequence initialization function for UE2 is $C_{init}(N_{ID})$=6, t is the slot t where SRS transmission occurs, $Y$ has a value of 5. The offsets of the SRS transmitted by UE1 and UE2 in a comb transmission at different periods can be obtained according to the SRS sequence generated according to formula (20) with a comb value of 4 in a resource block, as shown in Fig. 5.

In embodiments of the present disclosure, taking the offset information as an example of cyclic shift offset information, the process of transmitting SRS by two terminals is illustrated.

Assuming that terminal UE1 is an edge user within cell 1, terminal UE2 is the center user within cell 2, and cell 1 and cell 2 are neighboring cells. The network device within the cell, such as the base station, configures UE1 and UE2 with cell IDs of 5 and 6, respectively. The base station has configured two port periods of SRS resources for UE1 and UE2, namely SRS resource 1 and SRS resource 2, with a period of T=5ms. The comb values of the SRS resources are both set to 4, and the number $N_{symb}^{SRS}$ of OFDM symbols is 4. The numerical offset values of these two resources are configured within a comb transmission range as $\overline{k}_{TC}$ = 0. The cyclic shift value corresponding to each port of SRS resource 1 or SRS resource 2 is:

$$n_{SRS}^{cs,i} = \left( n_{SRS}^{cs} + \frac{n_{SRS}^{cs,\max} \lfloor (p_i - 1000) \rfloor}{N_{ap}^{SRS}} + f_{csh}(n_{s,f}^{\mu}, Y') \right) \bmod n_{SRS}^{cs,\max} \tag{21}$$

wherein

$$f_{csh}(n_{s,f}^{\mu}, Y') = \left( \sum_{m=0}^{4} c\left(4(N_{symb}^{slot} n_{s,f}^{\mu} + l_0 + Y') + m\right) \cdot 2^m \right) \bmod n_{SRS}^{cs,\max} \tag{22}$$

the random sequence initialization function for UE1 is determined as $C_{init}(N_{ID})$=5 and the random sequence initialization function for UE2 is $C_{init}(N_{ID})$=6, t is the slot t where SRS transmission is located, and $Y'$ has a value of $l' + \lfloor t/5 \rfloor$, $l' \in \left\{ 0, 1, ..., N_{symb}^{SRS} - 1 \right\}$. For SRS resources in different cells, although the transmission positions of SRS in the time-frequency domain are the same, the random sequences generated at different symbol positions in different slots according to the above formula are also different, which randomizes the interference between SRS transmissions in different cells.

It should be noted that those skilled in the art can understand that the various embodiments/implementations mentioned above in this disclosure can be used in conjunction with the aforementioned embodiments or independently. Whether used alone or in conjunction with the aforementioned embodiments, the implementation principle is similar. In implementation of the present disclosure, some embodiments are described as being used together. Of course, those skilled in the art can understand that such examples do not limit the embodiments of the present disclosure.

Fig. 6 is a schematic flowchart of a method for transmitting a sounding reference signal (SRS) according to an exemplary embodiment. The method is performed by a network device, and as shown in Fig. 6, he method includes the following steps.

In step S61, identification information is sent to a terminal, so that the terminal determines a pseudo-random sequence function based on the identification information, and determines offset information based on the pseudo-random sequence function.

The identification information includes a cell identifier of a cell where the terminal is located and/or an identifier of a transmission and reception point corresponding to the terminal.

In step S62, the SRS signal determined and transmitted by the terminal based on the offset information is received.

In an implementation, the method further includes: sending an SRS resource configuration parameter to the terminal, so that the terminal determines a random sequence initialization function based on the identification information or based on the SRS resource configuration parameter and the identification information, and determines the pseudo-random sequence function at least based on the random sequence initialization function and a maximum offset value.

In an embodiment of the present disclosure, the random sequence initialization function satisfies a formula of $C_{init}(N_{ID}) = N_{ID}$ or $C_{init}(N_{ID}) = \left( 2^{10}(N_{symb}^{slot} n_{s,f}^{\mu} + 1)(2N_{ID} + 1) + N_{ID} \right) \bmod 2^{31}$; wherein, $C_{init}(N_{ID})$ is the random sequence initialization function, $N_{ID}$ is the cell identifier of the cell where the terminal is located and/or the identifier of the transmission and reception point corresponding to the terminal, $N_{symb}^{slot}$ is a number of symbols occupied by the SRS sequence in a slot, and $n_{s,f}^{\mu}$ is a number of slots occupied by the SRS sequence in a radio frame.

In an embodiment of the present disclosure, the SRS resource configuration parameter includes at least one of: a number of symbols occupied by the SRS sequence in a slot; a number of slots occupied by the SRS sequence in a radio frame; a starting position of transmission of the SRS sequence in a slot; or an integer value determined based on the maximum offset value.

In an embodiment of the present disclosure, the offset information includes offset information in SRS comb transmission, and the offset information in SRS comb transmission is used to determine a frequency-domain starting position of the SRS sequence corresponding to each SRS port after offset in one SRS comb transmission; the maximum offset value is the comb value of the SRS sequence; the pseudo-random sequence function satisfies a formula of

$$f_{ch}(n_{s,f}^{\mu}, Y) = \left( \sum_{m=0}^{X} c \left( X(N_{symb}^{slot} n_{s,f}^{\mu} + l_0 + Y) + m \right) \cdot 2^m \right) \bmod K_{TC}$$, wherein, $f_{ch}(n_{s,f}^{\mu}, Y)$ is a first pseudo-random sequence function; $c()$ is a Gold sequence generation function, and an initialization value of the Gold sequence generation function is the random sequence initialization function; $X$ is the comb value of the SRS sequence or an integer multiple of the comb value; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y$ is a first reference value; $m \in \{0,...,X\}$; $K_{TC}$ is the comb value of the SRS sequence; $\Sigma$ is a sum function; mod is a remainder function.

In an embodiment of the present disclosure, a value of $Y$ is determined by a linear sum of one or more of: 0;

$l' \in \left\{ 0, 1, ..., N_{symb}^{SRS} - 1 \right\}$; a slot t where SRS transmission is located; an identifier $n_{ID}^{SRS}$ of the SRS sequence; $N_{ID}$;

$k' \in \{0,..., K_{TC}\text{-}1\}$; $\left\lfloor t/T \right\rfloor$, wherein t is the slot t where SRS transmission is located, T is a period of the SRS transmission,

$\left\lfloor X \right\rfloor$ represents downward rounding of X.

In an embodiment of the present disclosure, determining the offset information based on the pseudo-random sequence function includes: randomizing comb transmission offset parameters of the SRS sequence based on the first pseudo-random sequence function, to obtain the offset information within SRS comb transmission; wherein the comb transmission offset parameters of the SRS sequence include offset values $k_{TC}^{(p_i)}$ of the SRS sequence corresponding to SRS ports within a comb value, and offset values $k_{offset}^{l'}$ of the SRS sequence at different symbols within a comb value; randomizing the comb transmission offset parameters of the SRS sequence based on the first pseudo-random sequence function includes at least one of: randomizing $k_{TC}^{(p_i)}$ and $k_{offset}^{l'}$ as a whole based on the first pseudo-random sequence function, to obtain the offset information within SRS comb transmission; or randomizing $k_{TC}^{(p_i)}$ based on the first pseudo-random sequence function, and obtaining the offset information within SRS comb transmission based on randomized $k_{TC}^{(p_i)}$.

In an embodiment of the present disclosure, randomizing $k_{TC}^{(p_i)}$ and $k_{offset}^{l'}$ as a whole based on the first pseudo-random sequence function to obtain the offset information within SRS comb transmission is represented by

$\overline{k}_0^{(p_i)} = n_{shift} N_{sc}^{RB} + (k_{TC}^{(p_i)} + k_{offset}^{l'} + f_{ch}(n_{s,f}^{\mu}, Y)) \bmod K_{TC}$, wherein, is an offset within the SRS comb transmission; $n_{shift}$ is an offset position relative to a reference point; $N_{sc}^{RB}$ is a number of subcarriers contained in a resource block

(RB); $k_{TC}^{(p_i)}$ is an offset value of the SRS sequence corresponding to the i-th SRS port within a comb value; $p_i$ is an antenna

port index corresponding to the i-th SRS port; $k_{offset}^{l'}$ are offset values of the SRS sequence at different symbols within a comb value; $f_{ch}(n_{s,f}^{\mu}, Y)$ is the first pseudo-random sequence function; $K_{TC}$ is the comb value; mod is a remainder function.

In an embodiment of the present disclosure, randomizing $k_{TC}^{(p_i)}$ based on the first pseudo-random sequence function is represented by:

$$\overline{k_{TC}^{(p_i)}} = \begin{cases} \left(\overline{k}_{TC} + K_{TC}/2 + f_{ch}(n_{s,f}^{\mu}, Y)\right) \bmod K_{TC} & \text{if } N_{ap}^{SRS}=4, \ p_i \in \{1001,1003\} \text{ and } n_{SRS}^{cs,\max}=6 \\ \left(\overline{k}_{TC} + K_{TC}/2 + f_{ch}(n_{s,f}^{\mu}, Y)\right) \bmod K_{TC} & \text{if } N_{ap}^{SRS}=4, \ p_i \in \{1001,1003\} \text{ and } n_{SRS}^{cs}= \in \{n_{SRS}^{cs,\max}/2,.., \ n_{SRS}^{cs,\max}-1\} \\ \overline{k}_{TC} + f_{ch}(n_{s,f}^{\mu}, Y) & \text{others} \end{cases}$$

wherein, $\overline{k_{TC}^{(p_i)}}$ is an offset value obtained by randomizing the offset value of the SRS sequence corresponding to the i-th SRS port within a comb value; $\overline{k}_{TC}$ is an offset comb value; $f_{ch}\left(n_{s,f}^{\mu}, Y\right)$ is the first pseudo-random sequence function; $K_{TC}$ is the comb value; mod is a remainder function; $N_{ap}^{SRS}$ is a number of ports for SRS resources; $n_{SRS}^{cs}$ is a cyclic shift value configured by a network device; $n_{SRS}^{cs,\max}$ is a maximum number of cyclic shifts configured by the network device.

In an embodiment of the present disclosure, the offset information includes cyclic shift offset information; the maximum offset value is the maximum number of maximum cyclic shifts; the pseudo-random sequence function satisfies

$$f_{csh}(n_{s,f}^{\mu}, Y') = \left(\sum\nolimits_{m=0}^{X'} c\left(X'(N_{symb}^{slot}n_{s,f}^{\mu} + l_0 + Y') + m\right) \cdot 2^m\right) \bmod n_{SRS}^{cs,\max}$$, wherein, $f_{csh}(n_{s,f}^{\mu}, Y')$ is a second pseudo-random sequence function; $c()$ is a Gold sequence generation function, and an initialization value of the Gold sequence generation function is the random sequence initialization function $C_{init}(N_{ID})$; $X'$ is an integer value determined by the maximum number of cyclic shifts configured by a network device, which is the maximum number of cyclic shifts, or an integer multiple of the maximum number of cyclic shifts, or the same value as a value generated by a group hop sequence; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y$ is a second reference value; $m \in \{0,...,X\}$; $n_{SRS}^{cs,\max}$ is the maximum number of cyclic shifts configured by the network device; $\Sigma$ is a sum function; mod is a remainder function.

In an embodiment of the present disclosure, a value of $Y'$ is determined by a linear sum of one or more of: 0; $l' \in \left\{0,1,...,N_{symb}^{SRS}-1\right\}$; a slot t where SRS transmission is located; an identifier $n_{ID}^{SRS}$ of the SRS sequence; $N_{ID}$; $k' \in = \{0,1,..., K_{TC}-1\}$; $\lfloor t/T \rfloor$, wherein t is the slot t where SRS transmission is located, T is a period of the SRS transmission, $\lfloor X \rfloor$ represents downward rounding of X; and different SRS port indices, or different SRS port indices minus a third reference value $n_{ref}$.

In an embodiment of the present disclosure, determining the offset information based on the pseudo-random sequence function includes: performing random offset on a cyclic shift parameter of the SRS sequence based on the second pseudo-random sequence function, to obtain cyclic shift offset information; wherein performing random offset on a cyclic shift parameter of the SRS sequence based on the second pseudo-random sequence function to obtain cyclic shift offset information is represented by at least one of:

$$n_{SRS}^{cs,i} = \begin{cases} \left(n_{SRS}^{cs} + \dfrac{n_{SRS}^{cs,\max}\lfloor (p_i-1000)/2 \rfloor}{N_{ap}^{SRS}/2} + f_{csh}(n_{s,f}^{\mu}, Y')\right) \bmod \left(I \times n_{SRS}^{cs,\max}\right) & \text{if } N_{ap}^{SRS}=4 \text{ and } n_{SRS}^{cs,\max}=6 \\ \left(n_{SRS}^{cs} + \dfrac{n_{SRS}^{cs,\max}\lfloor (p_i-1000) \rfloor}{N_{ap}^{SRS}} + f_{csh}(n_{s,f}^{\mu}, Y')\right) \bmod \left(I \times n_{SRS}^{cs,\max}\right) & \text{others} \end{cases}$$

or

$$n_{SRS}^{cs,i} = \begin{cases} \left( \left\lfloor n_{SRS}^{cs} + \frac{n_{SRS}^{cs,\max} \lfloor (p_i - 1000)/2 \rfloor}{N_{ap}^{SRS}/2} \right\rfloor \right) \mod n_{SRS}^{cs,\max} + f_{csh}(n_{s,f}^\mu, Y') & \text{if } N_{ap}^{SRS} = 4 \text{ and } n_{SRS}^{cs,\max} = 6 \\ \left( \left\lfloor n_{SRS}^{cs} + \frac{n_{SRS}^{cs,\max} \lfloor (p_i - 1000) \rfloor}{N_{ap}^{SRS}} \right\rfloor \right) \mod n_{SRS}^{cs,\max} + f_{csh}(n_{s,f}^\mu, Y') & \text{others} \end{cases}$$

wherein, $n_{SRS}^{cs,i}$ is the cyclic shift offset information; $N_{ap}^{SRS}$ is a number of ports for SRS resources; $n_{SRS}^{cs}$ is a cyclic shift value configured by a network device; $n_{SRS}^{cs,\max}$ is the maximum number of cyclic shifts configured by the network device; $p_i$ is an antenna port index corresponding to the i-th SRS port; $f_{csh}(n_{s,f}^\mu, Y')$ is the second pseudo-random sequence function; $I$ is greater than or equal to 1; mod is a remainder function.

In an embodiment of the present disclosure, the method further includes: in response to determining that time-frequency domain resources for transmitting the sounding reference signal overlap with time-frequency domain resources for transmitting another sounding reference signal, sending a change indication to the terminal; wherein the change indication is used to indicate the terminal sending the sounding reference signal to change a comb value offset of the sounding reference signal or change a cyclic shift value of the sounding reference signal; and/or the change indication is used to indicate the terminal sending the other sounding reference signal to change a comb value offset of the other sounding reference signal or change a cyclic shift value of the other sounding reference signal.

According to the technical solution in embodiments of the present disclosure, by determining a pseudo-random sequence function based on the identification information including the cell identifier of the cell where the terminal is located and/or the identifier of the transmission and reception point corresponding to the terminal, and randomizing the SRS signal transmitted by the terminal based on the offset information determined by the pseudo-random sequence function, it is possible to avoid interference caused by the offset of SRS of the edge user being the same as that of SRS of the center user, and improve the estimation performance of the uplink channel.

Based on the same concept, embodiments of the present disclosure also provide an apparatus for transmitting a sounding reference signal (SRS).

It can be understood that the apparatus for transmitting the sounding reference signal (SRS) provided in embodiments of the present disclosure includes hardware structures and/or software modules corresponding to each function to achieve the above functions. Based on the units and algorithm steps of the examples disclosed in embodiments of this disclosure, embodiments of this disclosure can be implemented in the form of hardware or a combination of hardware and computer software. Whether a certain function is executed through hardware or computer software driven hardware depends on the specific application and design constraints of the technical solution. Technicians in this field can use different methods to achieve the described functions for each specific application, but such implementation should not be considered beyond the scope of the technical solutions in embodiments of the present disclosure.

Fig. 7 is a block diagram of an apparatus for transmitting a sounding reference signal (SRS) according to an exemplary embodiment. Referring to Fig. 7, the apparatus 700 includes a determining unit 701 and a communication unit 702.

The determining unit 701 is configured to determine offset information based on a pseudo-random sequence function, wherein the offset information is used to randomize the SRS signal transmitted by the terminal, the pseudo-random sequence function is determined based on identification information, the identification information including a cell identifier of a cell where the terminal is located and/or an identifier of a transmission and reception point corresponding to the terminal; and

The communication unit 702 is configured to transmit the SRS signal based on the offset information.

In an embodiment of the present disclosure, the pseudo-random sequence function is determined based on at least a random sequence initialization function and a maximum offset value; the maximum offset value includes a comb value of an SRS sequence and/or a maximum number of maximum cyclic shifts; the random sequence initialization function is determined based on the identification information or based on an SRS resource configuration parameter and the identification information.

In an embodiment of the present disclosure, the random sequence initialization function satisfies a formula of

$$C_{init}(N_{ID}) = N_{ID} \quad \text{or} \quad C_{init}(N_{ID}) = \left( 2^{10}(N_{symb}^{slot} n_{s,f}^\mu + 1)(2N_{ID} + 1) + N_{ID} \right) \mod 2^{31}$$, wherein, $C_{init}(N_{ID})$ is the random sequence initialization function, $N_{ID}$ is the cell identifier of the cell where the terminal is located and/or the identifier of the transmission and reception point corresponding to the terminal, $N_{symb}^{slot}$ is a number of symbols occupied by the SRS sequence in a slot, and $n_{s,f}^{\mu}$ is a number of slots contained in one radio frame.

In an embodiments of the present disclosure, the SRS resource configuration parameter includes at least one of: a number of symbols occupied by the SRS sequence in a slot; a number of slots occupied by the SRS sequence in a radio frame; a starting position of transmission of the SRS sequence in a slot; or an integer value determined based on the maximum offset value.

In an embodiment of the present disclosure, the offset information includes offset information in SRS comb transmission, and the offset information in SRS comb transmission is used to determine a frequency-domain starting position of the SRS sequence corresponding to each SRS port after offset in one SRS comb transmission; the maximum offset value is the comb value of the SRS sequence; the pseudo-random sequence function satisfies a formula of

$$f_{ch}(n_{s,f}^{\mu}, Y) = \left( \sum_{m=0}^{X} c\left( X(N_{symb}^{slot} n_{s,f}^{\mu} + l_0 + Y) + m \right) \cdot 2^m \right) \bmod K_{TC}$$

, wherein, $f_{ch}(n_{s,f}^{\mu}, Y)$ is a first pseudo-random sequence function; $c()$ is a Gold sequence generation function, and an initialization value of the Gold sequence generation function is the random sequence initialization function; $X$ is the comb value of the SRS sequence or an integer multiple of the comb value; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y$ is a first reference value; $m \in \{0,...,X\}$; $K_{TC}$ is the comb value of the SRS sequence; $\Sigma$ is a sum function; mod is a remainder function.

In an embodiment of the present disclosure, a value of $Y$ is determined by a linear sum of one or more of: 0; $l' \in \left\{ 0,1,...,N_{symb}^{SRS}-1 \right\}$; a slot t where SRS transmission is located; an identifier $n_{ID}^{SRS}$ of the SRS sequence; $N_{ID}$; $k' \in$ = $\{0,1,...,K_{TC}-1\}$; $\lfloor t/T \rfloor$, wherein t is the slot t where SRS transmission is located, T is a period of the SRS transmission, $\lfloor X \rfloor$ represents downward rounding of X.

In an embodiment of the present disclosure, determining the offset information based on the pseudo-random sequence function includes: randomizing comb transmission offset parameters of the SRS sequence based on the first pseudo-random sequence function, to obtain the offset information within SRS comb transmission.

In an embodiment of the present disclosure, the comb transmission offset parameters of the SRS sequence include offset values $k_{TC}^{(p_i)}$ of the SRS sequence corresponding to SRS ports within a comb value, and offset values $k_{offset}^{l'}$ of the SRS sequence at different symbols within a comb value; randomizing the comb transmission offset parameters of the SRS sequence based on the first pseudo-random sequence function comprises at least one of: randomizing $k_{TC}^{(p_i)}$ and $k_{offset}^{l'}$ as a whole based on the first pseudo-random sequence function, to obtain the offset information within SRS comb transmission; or randomizing $k_{TC}^{(p_i)}$ based on the first pseudo-random sequence function, and obtaining the offset information within SRS comb transmission based on randomized $k_{TC}^{(p_i)}$.

In an embodiment of the present disclosure, randomizing $k_{TC}^{(p_i)}$ and $k_{offset}^{l'}$ as a whole based on the first pseudo-random sequence function to obtain the offset information within SRS comb transmission is represented by

$$\overline{k}_0^{(p_i)} = n_{shift} N_{sc}^{RB} + (k_{TC}^{(p_i)} + k_{offset}^{l'} + f_{ch}(n_{s,f}^{\mu}, Y)) \bmod K_{TC}$$

, wherein, $\overline{k}_0^{(p_i)}$ is an offset within the SRS comb transmission; $n_{shift}$ is an offset position relative to a reference point; $N_{sc}^{RB}$ is a number of subcarriers contained in a resource block (RB); $k_{TC}^{(p_i)}$ is an offset value of the SRS sequence corresponding to the i-th SRS port within a comb value;

$p_i$ is an antenna port index corresponding to the i-th SRS port; $k_{offset}^{j'}$ are offset values of the SRS sequence at different symbols within a comb value; $f_{ch}(n_{s,f}^{\mu}, Y)$ is the first pseudo-random sequence function; $K_{TC}$ is the comb value; mod is a remainder function.

In an embodiment of the present disclosure, randomizing $k_{TC}^{(p_i)}$ based on the first pseudo-random sequence function is represented by:

$$\overline{k_{TC}^{(p_i)}} = \begin{cases} (\overline{k}_{TC} + K_{TC}/2 + f_{ch}(n_{s,f}^{\mu}, Y)) \bmod K_{TC} & \text{if } N_{ap}^{SRS}=4, \ p_i \in \{1001,1003\} \text{ and } n_{SRS}^{cs,\max}=6 \\ (\overline{k}_{TC} + K_{TC}/2 + f_{ch}(n_{s,f}^{\mu}, Y)) \bmod K_{TC} & \text{if } N_{ap}^{SRS}=4, \ p_i \in \{1001,1003\} \text{ and } n_{SRS}^{cs}= \in \{n_{SRS}^{cs,\max}/2,..., \ n_{SRS}^{cs,\max}-1\} \\ \overline{k}_{TC} + f_{ch}(n_{s,f}^{\mu}, Y) & \text{others} \end{cases}$$

wherein, $\overline{k_{TC}^{(p_i)}}$ is a randomized offset value of the SRS sequence corresponding to the i-th SRS port within a comb value;

$\overline{k}_{TC}$ is an offset comb value; $f_{ch}(n_{s,f}^{\mu}, Y)$ is the first pseudo-random sequence function; $K_{TC}$ is the comb value; mod is a remainder function; $N_{ap}^{SRS}$ is a number of ports for SRS resources; $n_{SRS}^{cs}$ is a cyclic shift value configured by a network device; $n_{SRS}^{cs,\max}$ is a maximum number of cyclic shifts configured by the network device.

In an embodiment of the present disclosure, transmitting the SRS signal based on the offset information includes: determining a frequency domain position occupied by SRS based on the offset information in SRS comb transmission, a starting position within a specified bandwidth size during partial frequency domain transmission, and a starting position of each hop; and transmitting the SRS at the frequency domain position determined.

In an embodiment of the present disclosure, the offset information includes cyclic shift offset information; the maximum offset value is the maximum number of maximum cyclic shifts; the pseudo-random sequence function satisfies

$$f_{csh}(n_{s,f}^{\mu}, Y') = \left(\sum_{m=0}^{X'} c\left(X'(N_{symb}^{slot} n_{s,f}^{\mu} + l_0 + Y') + m\right) \cdot 2^m\right) \bmod n_{SRS}^{cs,\max}$$ , wherein, $f_{csh}(n_{s,f}^{\mu}, Y')$ is a

second pseudo-random sequence function; $c()$ is a Gold sequence generation function, and an initialization value of the Gold sequence generation function is the random sequence initialization function $C_{init}(N_{ID})$; $X'$ is an integer value determined by the maximum number of cyclic shifts configured by a network device, which is the maximum number of cyclic shifts, or an integer multiple of the maximum number of cyclic shifts, or the same value as a value generated by a group hopping sequence, wherein group hopping refers to randomly selecting a group from SRS base sequences containing multiple groups to generate SRS sequences, and in one example, X can take the value of 8 ; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y'$ is a second reference value; $m \in \{0,...,X\}$;

$n_{SRS}^{cs,\max}$ is the maximum number of cyclic shifts configured by the network device; $\Sigma$ is a sum function; mod is a remainder function.

In an embodiment of the present disclosure, a value of $Y'$ is determined by a linear sum of one or more of: 0;

$l' \in \{0,1,...,N_{symb}^{SRS}-1\}$ ; a slot t where SRS transmission is located; an identifier $n_{ID}^{SRS}$ of the SRS sequence; $N_{ID}$;

$k' \in \{0,1,...,K_{TC}-1\}$; $\lfloor t/T \rfloor$ , wherein t is the slot t where SRS transmission is located, T is a period of the SRS transmission,

$\lfloor X \rfloor$ represents downward rounding of X; and different SRS port indices, or different SRS port indices minus a third reference value $n_{ref}$.

In an embodiment of the present disclosure, determining the offset information based on the pseudo-random sequence function includes: performing random offset on a cyclic shift parameter of the SRS sequence based on the second pseudo-random sequence function, to obtain cyclic shift offset information.

In an embodiment of the present disclosure, performing random offset on a cyclic shift parameter of the SRS sequence based on the second pseudo-random sequence function to obtain cyclic shift offset information is represented by at least one of:

$$n_{SRS}^{cs,i} = \begin{cases} \left( n_{SRS}^{cs} + \dfrac{n_{SRS}^{cs,max} \lfloor (p_i - 1000)/2 \rfloor}{N_{ap}^{SRS}/2} + f_{csh}(n_{s,f}^{\mu}, Y') \right) \mod \left( I \times n_{SRS}^{cs,max} \right) & \text{if } N_{ap}^{SRS} = 4 \text{ and } n_{SRS}^{cs,max} = 6 \\ \left( n_{SRS}^{cs} + \dfrac{n_{SRS}^{cs,max} \lfloor (p_i - 1000) \rfloor}{N_{ap}^{SRS}} + f_{csh}(n_{s,f}^{\mu}, Y') \right) \mod \left( I \times n_{SRS}^{cs,max} \right) & \text{others} \end{cases} ;$$

or

$$n_{SRS}^{cs,i} = \begin{cases} \left( n_{SRS}^{cs} + \dfrac{n_{SRS}^{cs,max} \lfloor (p_i - 1000)/2 \rfloor}{N_{ap}^{SRS}/2} \right) \mod n_{SRS}^{cs,max} + f_{csh}(n_{s,f}^{\mu}, Y') & \text{if } N_{ap}^{SRS} = 4 \text{ and } n_{SRS}^{cs,max} = 6 \\ \left( n_{SRS}^{cs} + \dfrac{n_{SRS}^{cs,max} \lfloor (p_i - 1000) \rfloor}{N_{ap}^{SRS}} \right) \mod n_{SRS}^{cs,max} + f_{csh}(n_{s,f}^{\mu}, Y') & \text{others} \end{cases}$$

wherein, $n_{SRS}^{cs,i}$ is the cyclic shift offset information; $N_{ap}^{SRS}$ is a number of ports for SRS resources; $n_{SRS}^{cs}$ is a cyclic shift value configured by a network device; $n_{SRS}^{cs,max}$ is the maximum number of cyclic shifts configured by the network device; $p_i$ is an antenna port index corresponding to the i-th SRS port; $f_{csh}(n_{s,f}^{\mu}, Y')$ is the second pseudo-random sequence function; $I$ is greater than or equal to 1; mod is a remainder function.

In an embodiment of the present disclosure, transmitting the SRS signal based on the offset information includes: generating an SRS random sequence based on the cyclic shift offset information; and transmitting the SRS random sequence.

According to the technical solution in embodiments of the present disclosure, by determining a pseudo-random sequence function based on the identification information including the cell identifier of the cell where the terminal is located and/or the identifier of the transmission and reception point corresponding to the terminal, and randomizing the SRS signal transmitted by the terminal based on the offset information determined by the pseudo-random sequence function, it is possible to avoid interference caused by the offset of SRS of the edge user being the same as that of SRS of the center user, and improve the estimation performance of the uplink channel.

In an embodiment of the present disclosure, the communication unit 702 is further configured to: in response to receiving a change indication sent by a network device, changing a comb value offset of the sounding reference signal; or in response to receiving a change indication sent by a network device, changing a cyclic shift value of the sounding reference signal; wherein, the change indication is sent by the network device to the terminal when time-frequency domain resources for transmitting the sounding reference signal overlap with time-frequency domain resources for transmitting another sounding reference signal.

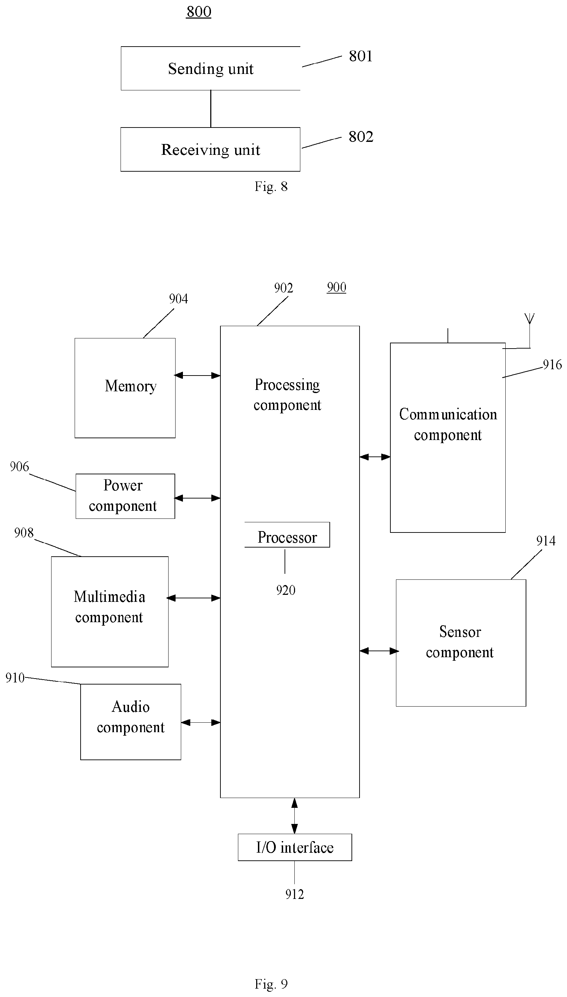

Fig. 8 is a block diagram of an apparatus for transmitting a sounding reference signal (SRS) according to an exemplary embodiment. Referring to Fig. 8, the apparatus 800 includes a sending unit 801 and a receiving unit 802.

The sending unit 801 is configured to send identification information to a terminal, so that the terminal determines a pseudo-random sequence function based on the identification information, and determines offset information based on the pseudo-random sequence function, wherein the identification information includes a cell identifier of a cell where the terminal is located and/or an identifier of a transmission and reception point corresponding to the terminal.

The receiving unit 802 is configured to receive the SRS signal determined and transmitted by the terminal based on the offset information.

In an embodiment of the present disclosure, the sending unit is further configured to: send an SRS resource configuration parameter to the terminal, so that the terminal determines a random sequence initialization function based on the identification information or based on the SRS resource configuration parameter and the identification information, and determines the pseudo-random sequence function at least based on the random sequence initialization function and a maximum offset value.

In an embodiment of the present disclosure, the random sequence initialization function satisfies a formula of

$$C_{init}(N_{ID}) = N_{ID} \quad \text{or} \quad C_{init}(N_{ID}) = \left(2^{10}(N_{symb}^{slot}n_{s,f}^{\mu}+1)(2N_{ID}+1)+N_{ID}\right) \bmod 2^{31}$$ ; wherein, $C_{init}(N_{ID})$ is the random sequence initialization function, $N_{ID}$ is the cell identifier of the cell where the terminal is located and/or the identifier of the transmission and reception point corresponding to the terminal, $N_{symb}^{slot}$ is a number of symbols occupied by the SRS sequence in a slot, and $n_{s,f}^{\mu}$ is a number of slots occupied by the SRS sequence in a radio frame.

In an embodiment of the present disclosure, the SRS resource configuration parameter includes at least one of: a number of symbols occupied by the SRS sequence in a slot; a number of slots occupied by the SRS sequence in a radio frame; a starting position of transmission of the SRS sequence in a slot; or an integer value determined based on the maximum offset value.

In an embodiment of the present disclosure, the offset information includes offset information in SRS comb transmission, and the offset information in SRS comb transmission is used to determine a frequency-domain starting position of the SRS sequence corresponding to each SRS port after offset in one SRS comb transmission; the maximum offset value is the comb value of the SRS sequence; the pseudo-random sequence function satisfies a formula of

$$f_{ch}(n_{s,f}^{\mu},Y) = \left(\sum_{m=0}^{X} c\left(X(N_{symb}^{slot}n_{s,f}^{\mu}+l_0+Y)+m\right)\cdot 2^m\right) \bmod K_{TC}$$ wherein, $f_{ch}(n_{s,f}^{\mu},Y)$ is a first pseudo-random sequence function; $c()$ is a Gold sequence generation function, and an initialization value of the Gold sequence generation function is the random sequence initialization function; $X$ is the comb value of the SRS sequence or an integer multiple of the comb value; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y$ is a first reference value; $m \in \{0,...,X\}$; $K_{TC}$ is the comb value of the SRS sequence; $\Sigma$ is a sum function; mod is a remainder function.

In an embodiment of the present disclosure, a value of $Y$ is determined by a linear sum of one or more of: 0; $l' \in \left\{0,1,...,N_{symb}^{SRS}-1\right\}$; a slot t where SRS transmission is located; an identifier $n_{ID}^{SRS}$ of the SRS sequence; $N_{ID}$; ; $k' \in \{0,1,...,K_{TC}-1\}$; $\lfloor t/T \rfloor$, wherein t is the slot t where SRS transmission is located, T is a period of the SRS transmission, $\lfloor X \rfloor$ represents downward rounding of X.

In an embodiment of the present disclosure, determining the offset information based on the pseudo-random sequence function includes: randomizing comb transmission offset parameters of the SRS sequence based on the first pseudo-random sequence function, to obtain the offset information within SRS comb transmission; wherein the comb transmission offset parameters of the SRS sequence include offset values $k_{TC}^{(p_i)}$ of the SRS sequence corresponding to SRS ports within a comb value, and offset values $k_{offset}^{l'}$ of the SRS sequence at different symbols within a comb value; randomizing the comb transmission offset parameters of the SRS sequence based on the first pseudo-random sequence function includes at least one of: randomizing $k_{TC}^{(p_i)}$ and $k_{offset}^{l'}$ as a whole based on the first pseudo-random sequence function, to obtain the offset information within SRS comb transmission; or randomizing $k_{TC}^{(p_i)}$ based on the first pseudo-random sequence function, and obtaining the offset information within SRS comb transmission based on randomized $k_{TC}^{(p_i)}$.

In an embodiment of the present disclosure, randomizing $k_{TC}^{(p_i)}$ and $k_{offset}^{l'}$ as a whole based on the first pseudo-random sequence function to obtain the offset information within SRS comb transmission is represented by

$$\overline{k}_0^{(p_i)} = n_{shift} N_{sc}^{RB} + (k_{TC}^{(p_i)} + k_{offset}^{l'} + f_{ch}(n_{s,f}^{\mu}, Y)) \bmod K_{TC}$$ , wherein, $\overline{k}_0^{(p_i)}$ is an offset within the SRS comb transmission; $n_{shift}$ is an offset position relative to a reference point; $N_{sc}^{RB}$ is a number of subcarriers contained in a resource block (RB); $k_{TC}^{(p_i)}$ is an offset value of the SRS sequence corresponding to the i-th SRS port within a comb value;

$p_i$ is an antenna port index corresponding to the i-th SRS port; $k_{offset}^{l'}$ are offset values of the SRS sequence at different symbols within a comb value; $f_{ch}(n_{s,f}^{\mu}, Y)$ is the first pseudo-random sequence function; $K_{TC}$ is the comb value; mod is a remainder function.

In an embodiment of the present disclosure, randomizing $k_{TC}^{(p_i)}$ based on the first pseudo-random sequence function is represented by:

$$\overline{k_{TC}^{(p)}} = \begin{cases} (\overline{k}_{TC} + K_{TC}/2 + f_{ch}(n_{s,f}^{\mu}, Y)) \bmod K_{TC} & \text{if } N_{ap}^{SRS}=4, \ p_i \in \{1001,1003\} \text{ and } n_{SRS}^{cs,\max}=6 \\ (\overline{k}_{TC} + K_{TC}/2 + f_{ch}(n_{s,f}^{\mu}, Y)) \bmod K_{TC} & \text{if } N_{ap}^{SRS}=4, \ p_i \in \{1001,1003\} \text{ and } n_{SRS}^{cs}= \in \{n_{SRS}^{cs,\max}/2,.., \ n_{SRS}^{cs,\max}-1\} \\ \overline{k}_{TC} + f_{ch}(n_{s,f}^{\mu}, Y) & \text{others} \end{cases}$$

wherein, $\overline{k_{TC}^{(p_i)}}$ is an offset value obtained by randomizing the offset value of the SRS sequence corresponding to the i-th SRS port within a comb value; $K_{TC}$ is an offset comb value; $f_{ch}(n_{s,f}^{\mu}, Y)$ is the first pseudo-random sequence function;

$K_{TC}$ is the comb value; mod is a remainder function; $N_{ap}^{SRS}$ is a number of ports for SRS resources; $n_{SRS}^{cs}$ is a cyclic shift value configured by a network device; $n_{SRS}^{cs,\max}$ is a maximum number of cyclic shifts configured by the network device.

In an embodiment of the present disclosure, the offset information includes cyclic shift offset information; the maximum offset value is the maximum number of maximum cyclic shifts; the pseudo-random sequence function satisfies

$$f_{csh}(n_{s,f}^{\mu}, Y') = \left(\sum_{m=0}^{X'} c\left(X'(N_{symb}^{slot} n_{s,f}^{\mu} + l_0 + Y') + m\right) \cdot 2^m\right) \bmod n_{SRS}^{cs,\max}$$ , wherein, $f_{csh}(n_{s,f}^{\mu}, Y')$ is a

second pseudo-random sequence function; $c()$ is a Gold sequence generation function, and an initialization value of the Gold sequence generation function is the random sequence initialization function $C_{init}(N_{ID})_{;1}$; $X'$ is an integer value determined by the maximum number of cyclic shifts configured by a network device, which is the maximum number of cyclic shifts, or an integer multiple of the maximum number of cyclic shifts, or the same value as a value generated by a group hopping sequence, wherein group hopping refers to randomly selecting a group from SRS base sequences containing multiple groups to generate the SRS sequence, and in one example, X can take the value of 8; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y'$ is a second reference value; $m \in \{0,....,X\}$;

$n_{SRS}^{cs,\max}$ is the maximum number of cyclic shifts configured by the network device; $\Sigma$ is a sum function; mod is a remainder function.

In an embodiment of the present disclosure, a value of $Y'$ is determined by a linear sum of one or more of: 0;

$l' \in \left\{ 0,1,...,N_{symb}^{SRS} -1 \right\}$ ; a slot t where SRS transmission is located; an identifier $n_{ID}^{SRS}$ of the SRS sequence; $N_{ID}$; $k' \in$

$\{0,1,...,K_{TC}\text{-}1\}$; $\left\lfloor t/T \right\rfloor$ , wherein t is the slot t where SRS transmission is located, T is a period of the SRS transmission,

$\left\lfloor X \right\rfloor$ represents downward rounding of X; and different SRS port indices, or different SRS port indices minus a third reference value $n_{ref}$.

In an embodiment of the present disclosure, determining the offset information based on the pseudo-random sequence function includes: performing random offset on a cyclic shift parameter of the SRS sequence based on the second pseudo-random sequence function, to obtain cyclic shift offset information; wherein performing random offset on a cyclic shift parameter of the SRS sequence based on the second pseudo-random sequence function to obtain cyclic shift offset information is represented by at least one of:

$$n_{SRS}^{cs,i} = \begin{cases} \left( n_{SRS}^{cs} + \dfrac{n_{SRS}^{cs,max} \left\lfloor (p_i -1000)/2 \right\rfloor}{N_{ap}^{SRS}/2} + f_{csh}(n_{s,f}^{\mu},Y') \right) \bmod \left( I \times n_{SRS}^{cs,max} \right) & \text{if } N_{ap}^{SRS} =4 \text{ and } n_{SRS}^{cs,max} =6 \\[3mm] \left( n_{SRS}^{cs} + \dfrac{n_{SRS}^{cs,max} \left\lfloor (p_i -1000) \right\rfloor}{N_{ap}^{SRS}} + f_{csh}(n_{s,f}^{\mu},Y') \right) \bmod \left( I \times n_{SRS}^{cs,max} \right) & \text{others} \end{cases}$$

or

$$n_{SRS}^{cs,i} = \begin{cases} \left( n_{SRS}^{cs} + \dfrac{n_{SRS}^{cs,max} \left\lfloor (p_i -1000)/2 \right\rfloor}{N_{ap}^{SRS}/2} \right) \bmod n_{SRS}^{cs,max} + f_{csh}(n_{s,f}^{\mu},Y') & \text{if } N_{ap}^{SRS} =4 \text{ and } n_{SRS}^{cs,max} =6 \\[3mm] \left( n_{SRS}^{cs} + \dfrac{n_{SRS}^{cs,max} \left\lfloor (p_i -1000) \right\rfloor}{N_{ap}^{SRS}} \right) \bmod n_{SRS}^{cs,max} + f_{csh}(n_{s,f}^{\mu},Y') & \text{others} \end{cases}$$

wherein, $n_{SRS}^{cs,i}$ is the cyclic shift offset information; $N_{ap}^{SRS}$ is a number of ports for SRS resources; $n_{SRS}^{cs}$ is a cyclic shift value configured by a network device; $n_{SRS}^{cs,max}$ is the maximum number of cyclic shifts configured by the network device; $p_i$ is an antenna port index corresponding to the i-th SRS port; $f_{csh}(n_{s,f}^{\mu},Y')$ is the second pseudo-random sequence function; $I$ is greater than or equal to 1; mod is a remainder function.

In an embodiment of the present disclosure, the sending unit is further configured to: in response to determining that time-frequency domain resources for transmitting the sounding reference signal overlap with time-frequency domain resources for transmitting another sounding reference signal, send a change indication to the terminal; wherein the change indication is used to indicate the terminal sending the sounding reference signal to change a comb value offset of the sounding reference signal or change a cyclic shift value of the sounding reference signal; and/or the change indication is used to indicate the terminal sending the other sounding reference signal to change a comb value offset of the other sounding reference signal or change a cyclic shift value of the other sounding reference signal.

According to the technical solution in embodiments of the present disclosure, by determining a pseudo-random sequence function based on the identification information including the cell identifier of the cell where the terminal is located and/or the identification information of the transmission and reception point corresponding to the terminal, and randomizing the SRS signal transmitted by the terminal based on the offset information determined by the pseudo-random sequence function, it is possible to avoid interference caused by the offset of SRS of the edge user being the same as that of SRS of the center user, and improve the estimation performance of the uplink channel.

Regarding the apparatus in the above embodiment, the specific ways in which each module performs operations have been described in detail in the relevant embodiments of the method, and will not be elaborated here.

Fig. 40 is a block diagram of a device 900 for transmitting a sounding reference signal (SRS) according to an exemplary embodiment. For example, the device 900 may be a mobile phone, computer, digital broadcasting terminal, messaging device, game console, tablet device, medical device, fitness device, personal digital assistant, etc.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. When the device 900 is in an operation mode, such as a shooting mode or a video mode, the front camera and/or the rear camera can receive external multimedia data. Each front camera and rear camera can be a fixed optical lens system or have focal length and optical zoom capabilities.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker for outputting audio signals.

The I/O interface 912 provides an interface between the processing component 902 and peripheral interface modules, such as a keyboard, a click wheel, buttons, and the like. The buttons may include but are not limited to home button, volume button, start button, and lock button.

The sensor component 914 includes one or more sensors to provide status assessments of various aspects of the device 900. For instance, the sensor component 914 may detect an open/closed status of the device 900, relative positioning of components, e.g., the display and the keypad, of the device 900, a change in position of the device 900 or a component of the device 900, a presence or absence of a target object contact with the device 900, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, applicable for imaging applications. In some embodiments, the sensor component 914 may also include an acceleration sensor, a gyroscope sensor, a magnetic sensor, a pressure sensor or a temperature sensor.

The communication component 916 is configured to facilitate communication, wired or wirelessly, between the device 900 and other devices. The device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, to execute the method according to any of the above embodiments.

In an exemplary embodiment, a non-transitory computer readable storage medium including instructions is also provided, such as the memory 904 including instructions, which can be executed by the processor 920 of the device 900 to accomplish the above method. For example, the non-transitory computer readable storage medium may be ROM, random access memory (RAM), CD-ROM, magnetic tape, floppy disk, and optical data storage devices.

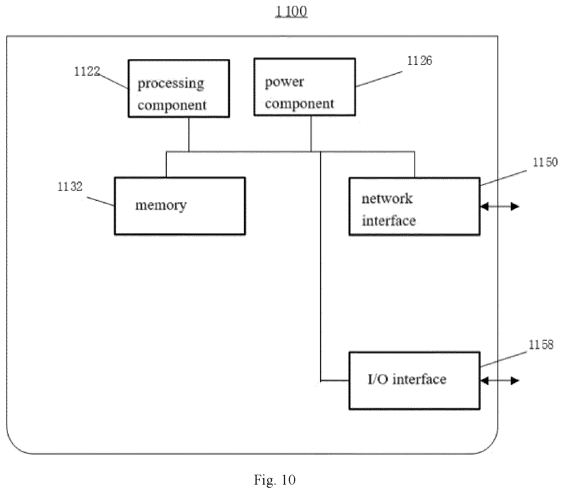

Fig. 10 is a block diagram of a device 1100 for sending a sounding reference signal (SRS) according to an exemplary embodiment. For example, the device 1100 may be provided as a server. Referring to Fig. 10, the device 1100 includes a processing component 1122, which further includes at least one processor, and memory resources represented by a memory 1132, configured to store instructions executable by the processing component 1122, for example, application programs. The application programs stored in memory 1132 may include one or more modules each corresponding to a set of instructions. In addition, the processing component 1122 is configured to execute instructions to perform the method described above.

The device 1100 may also include a power component 1126 configured to perform power management for the device 1100, a wired or wireless network interface 1150 configured to connect the device 1100 to the network, and an input/output (I/O) interface 1158. The device 1100 can operate based on operating systems stored in the memory 1132, such as Windows Server TM, Mac OS XTM, Unix TM, Linux TM, Free BSDTM, or similar.

It can be further understood that "multiple" in this disclosure refers to two or more, and other quantifiers are similar to it. 'And/or' describes the association relationship between related objects, indicating that there can be three types of relationships, for example, A and/or B, which can represent: A exists alone, A and B exist simultaneously, and B exists alone. The character '/' generally indicates that the associated object before and after is an 'or' relationship. The singular forms of 'one', 'said', and 'this' are also intended to include the majority form, unless the context clearly indicates otherwise.

It can be further understood that the meanings of words such as "in response" and "if" referred to in this disclosure depend on the context and the actual usage scenario. For example, the word "in response" used here can be interpreted as "when" or "upon" or "if".

It can be further understood that the terms "first", "second", etc. are used to describe various information, but these information should not be limited to these terms. These terms are only used to distinguish information of the same type from each other and do not indicate a specific order or level of importance. In fact, expressions such as "first" and "second" can be used interchangeably. For example, without departing from the scope of this disclosure, the first information may also be referred to as the second information, and similarly, the second information may also be referred to as the first information.

It can be further understood that although the operations are described in a specific order in the accompanying drawings in embodiments of the present disclosure, it should not be understood as requiring the execution of these operations in the specific order or serial order shown, or requiring the execution of all the operations shown to achieve the desired results. In specific environments, multitasking and parallel processing may be advantageous.

After considering the specification and practicing the invention disclosed herein, those skilled in the art will easily come up with other embodiments of the present disclosure. This application aims to cover any variations, uses, or adaptive changes of the present disclosure, which follow the general principles of the present disclosure and include common knowledge or customary technical means in the technical field not disclosed in the present disclosure.

It should be understood that this disclosure is not limited to the precise structure described above and shown in the accompanying drawings, and various modifications and changes can be made without departing from its scope. The scope of this disclosure is limited only by the scope of the rights attached.

**Claims**

1. A method for transmitting a sounding reference signal (SRS), performed by a terminal, comprising:

    determining offset information based on a pseudo-random sequence function, wherein the offset information is used to randomize the SRS signal transmitted by the terminal, the pseudo-random sequence function is determined based on identification information, the identification information comprising a cell identifier of a cell where the terminal is located and/or an identifier of a transmission and reception point corresponding to the terminal; and
    transmitting the SRS signal based on the offset information.

2. The method of claim 1, wherein the pseudo-random sequence function is determined based on at least a random sequence initialization function and a maximum offset value, wherein the maximum offset value comprises a comb value of an SRS sequence and/or a maximum number of maximum cyclic shifts;
    the random sequence initialization function is determined based on the identification information or based on an SRS resource configuration parameter and the identification information.

3. The method of claim 2, wherein the random sequence initialization function satisfies a formula of:

$$C_{init}(N_{ID}) = N_{ID};$$

or

$$C_{init}(N_{ID}) = \left(2^{10}(N_{symb}^{slot}n_{s,f}^{\mu}+1)(2N_{ID}+1)+N_{ID}\right)\bmod 2^{31};$$

wherein, $C_{init}(N_{ID})$ is the random sequence initialization function, $N_{ID}$ is the cell identifier of the cell where the terminal is located and/or the identifier of the transmission and reception point corresponding to the terminal, $N_{symb}^{slot}$ is a number of symbols occupied by the SRS sequence in a slot, and $n_{s,f}^{\mu}$ is a number of slots contained in one radio frame.

4. The method of claim 2 or 3, wherein the SRS resource configuration parameter comprises at least one of:

   a number of symbols occupied by the SRS sequence in a slot;
   a number of slots occupied by the SRS sequence in a radio frame;
   a starting position of transmission of the SRS sequence in a slot; or
   an integer value determined based on the maximum offset value.

5. The method of claim 4, wherein the offset information comprises offset information in SRS comb transmission, and the offset information in SRS comb transmission is used to determine a frequency domain starting position of the SRS sequence corresponding to each SRS port after offset in one SRS comb transmission;

   the maximum offset value is the comb value of the SRS sequence;
   the pseudo-random sequence function satisfies a formula of:

$$f_{ch}(n_{s,f}^{\mu},Y) = \left(\sum_{m=0}^{X} c\left(X(N_{symb}^{slot}n_{s,f}^{\mu}+l_0+Y)+m\right)\cdot 2^m\right)\bmod K_{TC}$$

   wherein, $f_{ch}(n_{s,f}^{\mu},Y)$ is a first pseudo-random sequence function; $c()$ is a Gold sequence generation function, and an initialization value of the Gold sequence generation function is the random sequence initialization function;

   $X$ is the comb value of the SRS sequence or an integer multiple of the comb value; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y$ is a first reference value; $m\in\{0,...,X\}$; $K_{TC}$ is the comb value of the SRS sequence; $\Sigma$ is a sum function; mod is a remainder function.

6. The method of claim 5, wherein a value of $Y$ is determined by a linear sum of one or more of:

   0;

$$l' \in \left\{0,1,...,N_{symb}^{SRS}-1\right\};$$

   a slot t where SRS transmission is located;

   an identifier $n_{ID}^{SRS}$ of the SRS sequence;
   $N_{ID}$;

$$k' \in \{0, 1, ..., K_{TC}-1\} ;$$

$\lfloor t/T \rfloor$, wherein t is the slot t where SRS transmission is located, T is a period of the SRS transmission, $\lfloor X \rfloor$ represents downward rounding of X.

7. The method of claim 5 or 6, wherein determining the offset information based on the pseudo-random sequence function comprises:
randomizing comb transmission offset parameters of the SRS sequence based on the first pseudo-random sequence function, to obtain the offset information within SRS comb transmission.

8. The method of claim 7, wherein the comb transmission offset parameters of the SRS sequence comprise offset values $k_{TC}^{(p_i)}$ of the SRS sequence corresponding to SRS ports within a comb value, and offset values $k_{offset}^{l'}$ of the SRS sequence at different symbols within a comb value;
randomizing the comb transmission offset parameters of the SRS sequence based on the first pseudo-random sequence function comprises at least one of:

randomizing $k_{TC}^{(p_i)}$ and $k_{offset}^{l'}$ as a whole based on the first pseudo-random sequence function, to obtain the offset information within SRS comb transmission; or

randomizing $k_{TC}^{(p_i)}$ based on the first pseudo-random sequence function, and obtaining the offset information within SRS comb transmission based on randomized $k_{TC}^{(p_i)}$.

9. The method of claim 8, wherein randomizing $k_{TC}^{(p_i)}$ and $k_{offset}^{l'}$ as a whole based on the first pseudo-random sequence function to obtain the offset information within SRS comb transmission is represented by:

$$\overline{k}_0^{(p_i)} = n_{shift} N_{sc}^{RB} + (k_{TC}^{(p_i)} + k_{offset}^{l'} + f_{ch}(n_{s,f}^{\mu}, Y)) \bmod K_{TC}$$

wherein, $\overline{k}_0^{(p_i)}$ is an offset within the SRS comb transmission; $n_{shift}$ is an offset position relative to a reference point; $N_{sc}^{RB}$ is a number of subcarriers contained in a resource block (RB); $k_{TC}^{(p_i)}$ is an offset value of the SRS sequence corresponding to the i-th SRS port within a comb value; $p_i$ is an antenna port index corresponding to the i-th SRS port; $k_{offset}^{l'}$ are offset values of the SRS sequence at different symbols within a comb value; $f_{ch}(n_{s,f}^{\mu}, Y)$ is the first pseudo-random sequence function; $K_{TC}$ is the comb value; mod is a remainder function.

10. The method of claim 8, wherein randomizing $k_{TC}^{(p_i)}$ based on the first pseudo-random sequence function is represented by:

$$\overline{k}_{TC}^{(p)} = \begin{cases} (\overline{k}_{TC} + K_{TC}/2 + f_{ch}(n_{s,f}^{\mu}, Y)) \bmod K_{TC} & \text{if } N_{ap}^{SRS} = 4, \ p_i \in \{1001, 1003\} \text{ and } n_{SRS}^{cs,\max} = 6 \\ (\overline{k}_{TC} + K_{TC}/2 + f_{ch}(n_{s,f}^{\mu}, Y)) \bmod K_{TC} & \text{if } N_{ap}^{SRS} = 4, \ p_i \in \{1001, 1003\} \text{ and } n_{SRS}^{cs} = \in \{n_{SRS}^{cs,\max}/2, ..., n_{SRS}^{cs,\max} - 1\} \\ \overline{k}_{TC} + f_{ch}(n_{s,f}^{\mu}, Y) & \text{others} \end{cases}$$

wherein, $\overline{k_{TC}^{(p_i)}}$ is an offset value obtained by randomizing the offset value of the SRS sequence corresponding to the i-th SRS port within a comb value; $\overline{k}_{TC}$ is an offset comb value; $f_{ch}\left(n_{s,f}^{\mu},Y\right)$ is the first pseudo-random sequence function; $K_{TC}$ is the comb value; mod is a remainder function; $N_{ap}^{SRS}$ is a number of ports for SRS resources; $n_{SRS}^{cs}$ is a cyclic shift value configured by a network device; is a maximum number of cyclic shifts configured by the network device.

11. The method of any of claims 5-10, wherein transmitting the SRS signal based on the offset information comprises:

determining a frequency domain position occupied by SRS based on the offset information in SRS comb transmission, a starting position within a specified bandwidth size during partial frequency domain transmission, and a starting position of each hop; and
transmitting the SRS at the frequency domain position determined.

12. The method of claim 4, wherein the offset information comprises cyclic shift offset information;

the maximum offset value is the maximum number of maximum cyclic shifts;
the pseudo-random sequence function satisfies

$$f_{csh}(n_{s,f}^{\mu},Y') = \left(\sum_{m=0}^{X'} c\left(X'(N_{symb}^{slot}n_{s,f}^{\mu} + l_0 + Y') + m\right) \cdot 2^m\right) \bmod n_{SRS}^{cs,\max} \quad ;$$

wherein, $f_{csh}(n_{s,f}^{\mu},Y')$ is a second pseudo-random sequence function; $c()$ is a Gold sequence generation function, and an initialization value of the Gold sequence generation function is the random sequence initialization function $C_{init}(N_{ID})$; $X'$ is an integer value determined by the maximum number of cyclic shifts configured by a network device, which is the maximum number of cyclic shifts, or an integer multiple of the maximum number of cyclic shifts, or the same value as a value generated by a group hop sequence; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y'$ is a second reference value; $m \in \{0,...,X\}$; $n_{SRS}^{cs,\max}$ is the maximum number of cyclic shifts configured by the network device; $\Sigma$ is a sum function; mod is a remainder function.

13. The method of claim 12, wherein a value of $Y'$ is determined by a linear sum of one or more of:

0;

$$l' \in \left\{0,1,...,N_{symb}^{SRS}-1\right\} ;$$

a slot t where SRS transmission is located;
an identifier $n_{ID}^{SRS}$ of the SRS sequence;
$N_{ID}$ ;

$$k' \in \left\{0,1,..., K_{TC}-1\right\} ;$$

$\lfloor t/T \rfloor$ , wherein t is the slot t where SRS transmission is located, T is a period of the SRS transmission, $\lfloor X \rfloor$

represents downward rounding of X; and
different SRS port indices, or different SRS port indices minus a third reference value $n_{ref}$.

14. The method of claim 12 or 13, wherein determining the offset information based on the pseudo-random sequence function comprises:
performing random offset on a cyclic shift parameter of the SRS sequence based on the second pseudo-random sequence function, to obtain cyclic shift offset information.

15. The method of claim 14, wherein performing random offset on a cyclic shift parameter of the SRS sequence based on the second pseudo-random sequence function to obtain cyclic shift offset information is represented by at least one of:

$$n_{SRS}^{cs,i} = \begin{cases} \left( n_{SRS}^{cs} + \dfrac{n_{SRS}^{cs,\max} \lfloor (p_i - 1000)/2 \rfloor}{N_{ap}^{SRS}/2} + f_{csh}(n_{s,f}^{\mu}, Y') \right) \bmod \left( I \times n_{SRS}^{cs,\max} \right) & \text{if } N_{ap}^{SRS} = 4 \text{ and } n_{SRS}^{cs,\max} = 6 \\[2em] \left( n_{SRS}^{cs} + \dfrac{n_{SRS}^{cs,\max} \lfloor (p_i - 1000) \rfloor}{N_{ap}^{SRS}} + f_{csh}(n_{s,f}^{\mu}, Y') \right) \bmod \left( I \times n_{SRS}^{cs,\max} \right) & \text{others} \end{cases}$$

or

$$n_{SRS}^{cs,i} = \begin{cases} \left( n_{SRS}^{cs} + \dfrac{n_{SRS}^{cs,\max} \lfloor (p_i - 1000)/2 \rfloor}{N_{ap}^{SRS}/2} \right) \bmod n_{SRS}^{cs,\max} + f_{csh}(n_{s,f}^{\mu}, Y') & \text{if } N_{ap}^{SRS} = 4 \text{ and } n_{SRS}^{cs,\max} = 6 \\[2em] \left( n_{SRS}^{cs} + \dfrac{n_{SRS}^{cs,\max} \lfloor (p_i - 1000) \rfloor}{N_{ap}^{SRS}} \right) \bmod n_{SRS}^{cs,\max} + f_{csh}(n_{s,f}^{\mu}, Y') & \text{others} \end{cases}$$

wherein, $n_{SRS}^{cs,i}$ is the cyclic shift offset information; $N_{ap}^{SRS}$ is a number of ports for SRS resources; $n_{SRS}^{cs}$ is a cyclic shift value configured by a network device; $n_{SRS}^{cs,\max}$ is the maximum number of cyclic shifts configured by the network device; $p_i$ is an antenna port index corresponding to the i-th SRS port; $f_{csh}(n_{s,f}^{\mu}, Y')$ is the second pseudo-random sequence function; $I$ is greater than or equal to 1; mod is a remainder function.

16. The method of any of claims 12-15, wherein transmitting the SRS signal based on the offset information comprises:

generating an SRS random sequence based on the cyclic shift offset information; and
transmitting the SRS random sequence.

17. The method of claim 1, further comprising:

in response to receiving a change indication sent by a network device, changing a comb value offset of the sounding reference signal; or
in response to receiving a change indication sent by a network device, changing a cyclic shift value of the sounding reference signal;
wherein, the change indication is sent by the network device to the terminal when time-frequency domain resources for transmitting the sounding reference signal overlap with time-frequency domain resources for transmitting another sounding reference signal.

18. A method for transmitting a sounding reference signal (SRS), performed by a network device, comprising:

sending identification information to a terminal, so that the terminal determines a pseudo-random sequence function based on the identification information, and determines offset information based on the pseudo-random sequence function, wherein the identification information comprises a cell identifier of a cell where the terminal is located and/or an identifier of a transmission and reception point corresponding to the terminal; and
receiving the SRS signal determined and transmitted by the terminal based on the offset information.

**19.** The method of claim 18, further comprising:
sending an SRS resource configuration parameter to the terminal, so that the terminal determines a random sequence initialization function based on the identification information or based on the SRS resource configuration parameter and the identification information, and determines the pseudo-random sequence function at least based on the random sequence initialization function and a maximum offset value, wherein the maximum offset value comprises a comb value of an SRS sequence and/or a maximum number of maximum cyclic shifts.

**20.** The method of claim 19, wherein the random sequence initialization function satisfies a formula of:

$$C_{init}(N_{ID}) = N_{ID};$$

or

$$C_{init}(N_{ID}) = \left(2^{10}(N_{symb}^{slot}n_{s,f}^{\mu}+1)(2N_{ID}+1)+N_{ID}\right) \bmod 2^{31};$$

wherein, $C_{init}(N_{ID})$ is the random sequence initialization function, $N_{ID}$ is the cell identifier of the cell where the terminal is located and/or the identifier of the transmission and reception point corresponding to the terminal, $N_{symb}^{slot}$ is a number of symbols occupied by the SRS sequence in a slot, and $n_{s,f}^{\mu}$ is a number of slots occupied by the SRS sequence in a radio frame.

**21.** The method of claim 19 or 20, wherein the SRS resource configuration parameter comprises at least one of:

a number of symbols occupied by the SRS sequence in a slot;
a number of slots occupied by the SRS sequence in a radio frame;
a starting position of transmission of the SRS sequence in a slot; or
an integer value determined based on the maximum offset value.

**22.** The method of claim 21, wherein the offset information comprises offset information in SRS comb transmission, and the offset information in SRS comb transmission is used to determine a frequency-domain starting position of the SRS sequence corresponding to each SRS port after offset in one SRS comb transmission;

the maximum offset value is the comb value of the SRS sequence;
the pseudo-random sequence function satisfies a formula of:

$$f_{ch}(n_{s,f}^{\mu},Y) = \left(\sum_{m=0}^{X} c\left(X(N_{symb}^{slot}n_{s,f}^{\mu}+l_0+Y)+m\right)\cdot 2^m\right) \bmod K_{TC}$$

wherein, $f_{ch}(n_{s,f}^{\mu},Y)$ is a first pseudo-random sequence function; $c()$ is a Gold sequence generation function, and an initialization value of the Gold sequence generation function is the random sequence initialization function; $X$ is the comb value of the SRS sequence or an integer multiple of the comb value; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y$ is a first reference value; $m \in \{0,...,X\}$; $K_{TC}$ is the comb value of the SRS sequence; $\Sigma$ is a sum function; mod is a remainder function.

**23.** The method of claim 22, wherein a value of $Y$ is determined by a linear sum of one or more of:

0;

$$I' \in \left\{ 0, 1, ..., N_{symb}^{SRS} - 1 \right\} ;$$

a slot t where SRS transmission is located;

an identifier $n_{ID}^{SRS}$ of the SRS sequence;

$N_{ID}$;

$$k' \in \left\{ 0, 1, ..., K_{TC} - 1 \right\} ;$$

$\lfloor t/T \rfloor$ , wherein t is the slot t where SRS transmission is located, T is a period of the SRS transmission, $\lfloor X \rfloor$ represents downward rounding of X.

24. The method of claim 22 or 23, wherein determining the offset information based on the pseudo-random sequence function comprises:

randomizing comb transmission offset parameters of the SRS sequence based on the first pseudo-random sequence function, to obtain the offset information within SRS comb transmission;

wherein the comb transmission offset parameters of the SRS sequence comprise offset values $k_{TC}^{(p_i)}$ of the SRS

sequence corresponding to SRS ports within a comb value, and offset values $k_{offset}^{l'}$ of the SRS sequence at different symbols within a comb value;
randomizing the comb transmission offset parameters of the SRS sequence based on the first pseudo-random sequence function comprises at least one of:

randomizing $k_{TC}^{(p_i)}$ and $k_{offset}^{l'}$ as a whole based on the first pseudo-random sequence function, to obtain the offset information within SRS comb transmission, or

randomizing $k_{TC}^{(p_i)}$ based on the first pseudo-random sequence function, and obtaining the offset information within SRS comb transmission based on randomized $k_{TC}^{(p_i)}$ .

25. The method of claim 24, wherein randomizing $k_{TC}^{(p_i)}$ and $k_{offset}^{l'}$ as a whole based on the first pseudo-random sequence function to obtain the offset information within SRS comb transmission is represented by:

$$\overline{k}_0^{(p_i)} = n_{shift} N_{sc}^{RB} + (k_{TC}^{(p_i)} + k_{offset}^{l'} + f_{ch}(n_{s,f}^{\mu}, Y)) \bmod K_{TC}$$

wherein, $\overline{k}_0^{(p_i)}$ is an offset within the SRS comb transmission; $n_{shift}$ is an offset position relative to a reference point;

$N_{sc}^{RB}$ is a number of subcarriers contained in a resource block (RB); $k_{TC}^{(p_i)}$ is an offset value of the SRS sequence corresponding to the i-th SRS port within a comb value; $p_i$ is an antenna port index corresponding to the i-th SRS port;

$k_{offset}^{l'}$ are offset values of the SRS sequence at different symbols within a comb value; $f_{ch}(n_{s,f}^{\mu}, Y)$ is the first pseudo-random sequence function; $K_{TC}$ is the comb value; mod is a remainder function.

26. The method of claim 24, wherein randomizing $k_{TC}^{(p_i)}$ based on the first pseudo-random sequence function is represented by:

$$\overline{k_{TC}^{(p_i)}} = \begin{cases} (\overline{k}_{TC} + K_{TC}/2 + f_{ch}(n_{s,f}^{\mu}, Y)) \bmod K_{TC} & \text{if } N_{ap}^{SRS} = 4, \ p_i \in \{1001, 1003\} \text{ and } n_{SRS}^{cs,\max} = 6 \\ (\overline{k}_{TC} + K_{TC}/2 + f_{ch}(n_{s,f}^{\mu}, Y)) \bmod K_{TC} & \text{if } N_{ap}^{SRS} = 4, \ p_i \in \{1001, 1003\} \text{ and } n_{SRS}^{cs} = \in \{n_{SRS}^{cs,\max}/2, \ldots, \ n_{SRS}^{cs,\max} - 1\} \\ \overline{k}_{TC} + f_{ch}(n_{s,f}^{\mu}, Y) & \text{others} \end{cases}$$

wherein, $\overline{k_{TC}^{(p_i)}}$ is an offset value obtained by randomizing the offset value of the SRS sequence corresponding to the i-th SRS port within a comb value; $\overline{k}_{TC}$ is an offset comb value; $f_{ch}(n_{s,f}^{\mu}, Y)$ is the first pseudo-random sequence function; $K_{TC}$ is the comb value; mod is a remainder function; $N_{ap}^{SRS}$ is a number of ports for SRS resources; $n_{SRS}^{cs}$ is a cyclic shift value configured by a network device; is a maximum number of cyclic shifts configured by the network device.

27. The method of claim 21, wherein the offset information comprises cyclic shift offset information;

the maximum offset value is the maximum number of maximum cyclic shifts;
the pseudo-random sequence function satisfies

$$f_{csh}(n_{s,f}^{\mu}, Y') = \left(\sum_{m=0}^{X'} c\left(X'(N_{symb}^{slot} n_{s,f}^{\mu} + l_0 + Y') + m\right) \cdot 2^m\right) \bmod n_{SRS}^{cs,\max} \quad ;$$

wherein, $f_{csh}(n_{s,f}^{\mu}, Y')$ is a second pseudo-random sequence function; $c()$ is a Gold sequence generation function, and an initialization value of the Gold sequence generation function is the random sequence initialization function $C_{init}(N_{ID})$; $X'$ is an integer value determined by the maximum number of cyclic shifts configured by a network device, which is the maximum number of cyclic shifts, or an integer multiple of the maximum number of cyclic shifts, or the same value as a value generated by a group hop sequence; $N_{symb}^{slot}$ is the number of symbols occupied by the SRS sequence in a slot; $n_{s,f}^{\mu}$ is the number of slots contained in one radio frame; $l_0$ is a time-domain starting position of the SRS sequence transmitted in a slot; $Y'$ is a second reference value; $m \in \{0,...,X\}$; $n_{SRS}^{cs,\max}$ is the maximum number of cyclic shifts configured by the network device; $\Sigma$ is a sum function; mod is a remainder function.

28. The method of claim 27, wherein a value of $Y'$ is determined by a linear sum of one or more of:

0;

$$l' \in \{0, 1, ..., N_{symb}^{SRS} - 1\} \quad ;$$

a slot t where SRS transmission is located;

an identifier $n_{ID}^{SRS}$ of the SRS sequence;

$N_{ID}$;

$$k' \in \{0,1,...,\ K_{TC}-1\}\ ;$$

$\lfloor t/T \rfloor$ , wherein t is the slot t where SRS transmission is located, T is a period of the SRS transmission, $\lfloor X \rfloor$ represents downward rounding of X; and

different SRS port indices, or different SRS port indices minus a third reference value $n_{ref}$.

29. The method of claim 27 or 28, wherein determining the offset information based on the pseudo-random sequence function comprises:

performing random offset on a cyclic shift parameter of the SRS sequence based on the second pseudo-random sequence function, to obtain cyclic shift offset information;

wherein performing random offset on a cyclic shift parameter of the SRS sequence based on the second pseudo-random sequence function to obtain cyclic shift offset information is represented by at least one of:

$$n_{SRS}^{cs,i} = \begin{cases} \left( n_{SRS}^{cs} + \dfrac{n_{SRS}^{cs,max} \lfloor (p_i - 1000)/2 \rfloor}{N_{ap}^{SRS}/2} + f_{csh}(n_{s,f}^{\mu}, Y') \right) \bmod \left( I \times n_{SRS}^{cs,max} \right) & \text{if } N_{ap}^{SRS}=4 \text{ and } n_{SRS}^{cs,max}=6 \\[4mm] \left( n_{SRS}^{cs} + \dfrac{n_{SRS}^{cs,max} \lfloor (p_i - 1000) \rfloor}{N_{ap}^{SRS}} + f_{csh}(n_{s,f}^{\mu}, Y') \right) \bmod \left( I \times n_{SRS}^{cs,max} \right) & \text{others} \end{cases} ;$$

or

$$n_{SRS}^{cs,i} = \begin{cases} \left( n_{SRS}^{cs} + \dfrac{n_{SRS}^{cs,max} \lfloor (p_i - 1000)/2 \rfloor}{N_{ap}^{SRS}/2} \right) \bmod n_{SRS}^{cs,max} + f_{csh}(n_{s,f}^{\mu}, Y') & \text{if } N_{ap}^{SRS}=4 \text{ and } n_{SRS}^{cs,max}=6 \\[4mm] \left( n_{SRS}^{cs} + \dfrac{n_{SRS}^{cs,max} \lfloor (p_i - 1000) \rfloor}{N_{ap}^{SRS}} \right) \bmod n_{SRS}^{cs,max} + f_{csh}(n_{s,f}^{\mu}, Y') & \text{others} \end{cases} ;$$

wherein, $n_{SRS}^{cs,i}$ is the cyclic shift offset information; $N_{ap}^{SRS}$ is a number of ports for SRS resources; $n_{SRS}^{cs}$ is a cyclic shift value configured by a network device; $n_{SRS}^{cs,max}$ is the maximum number of cyclic shifts configured by the network device; $p_i$ is an antenna port index corresponding to the i-th SRS port; $f_{csh}(n_{s,f}^{\mu}, Y')$ is the second pseudo-random sequence function; $I$ is greater than or equal to 1; mod is a remainder function.

30. The method of claim 18, further comprising: in response to determining that time-frequency domain resources for transmitting the sounding reference signal overlap with time-frequency domain resources for transmitting another sounding reference signal, sending a change indication to the terminal;

wherein the change indication is used to indicate the terminal sending the sounding reference signal to change a comb value offset of the sounding reference signal or change a cyclic shift value of the sounding reference signal; and/or

the change indication is used to indicate the terminal sending the other sounding reference signal to change a comb value offset of the other sounding reference signal or change a cyclic shift value of the other sounding reference signal.

31. An apparatus for transmitting a sounding reference signal (SRS), comprising:

a determining unit, configured to determine offset information based on a pseudo-random sequence function, wherein the offset information is used to randomize the SRS signal transmitted by the terminal, the pseudo-random sequence function is determined based on identification information, the identification information comprising a cell identifier of a cell where the terminal is located and/or an identifier of a transmission and reception point corresponding to the terminal; and
a communication unit, configured to transmit the SRS signal based on the offset information.

32. An apparatus for transmitting a sounding reference signal (SRS), comprising:

a sending unit, configured to send identification information to a terminal, so that the terminal determines a pseudo-random sequence function based on the identification information, and determines offset information based on the pseudo-random sequence function, wherein the identification information comprises a cell identifier of a cell where the terminal is located and/or an identifier of a transmission and reception point corresponding to the terminal; and
a receiving unit, configured to receive the SRS signal determined and transmitted by the terminal based on the offset information.

33. An apparatus for transmitting a sounding reference signal (SRS), comprising:

a processor; and
a memory for storing instructions executable by the processor;
wherein the processor is configured to implement the method of any of claims 1-17.

34. An apparatus for transmitting a sounding reference signal (SRS), comprising:

a processor; and
a memory for storing instructions executable by the processor;
wherein the processor is configured to implement the method of any of claims 18-30.

35. A storage medium, stored with instructions, which when executed by a processor of a terminal, enable the terminal to implement the method of any of claims 1-17, or when executed by a processor of a network device, enable the network device to implement the method of any of claims 18-30.

Fig. 1

| |
|---|
| Determining offset information based on a pseudo-random sequence function |

S21

| |
|---|
| Transmitting the SRS signal based on the offset information |

S22

Fig. 2

| |
|---|
| randomizing comb transmission offset parameters of the SRS sequence based on the first pseudo-random sequence function, to obtain the offset information within SRS comb transmission |

S31

Fig. 3

| |
|---|
| performing random offset on a cyclic shift parameter of the SRS sequence based on the second pseudo-random sequence function, to obtain cyclic shift offset information |

S41

Fig. 4

Fig. 5

sending identification information to a terminal, so that the terminal determines a pseudo-random sequence function based on the identification information, and determines offset information based on the pseudo-random sequence function

S61

receiving the SRS signal determined and transmitted by the terminal based on the offset information

S62

Fig. 6

700

Determining unit — 701

Communication unit — 702

Fig. 7

800

Sending unit — 801

Receiving unit — 802

Fig. 8

904

902    900

Memory

Processing
component

Communication
component

916

906

Power
component

908

Multimedia
component

Processor

920

910

Audio
component

Sensor
component

914

I/O interface

912

Fig. 9

1100

Fig. 10

## INTERNATIONAL SEARCH REPORT

| International application No. |
| --- |
| **PCT/CN2022/130167** |

### A.    CLASSIFICATION OF SUBJECT MATTER

H04L 27/00(2006.01)i

According to International Patent Classification (IPC) or to both national classification and IPC

### B.    FIELDS SEARCHED

Minimum documentation searched (classification system followed by classification symbols)

IPC: H04L，H04B，H04W

Documentation searched other than minimum documentation to the extent that such documents are included in the fields searched

Electronic data base consulted during the international search (name of data base and, where practicable, search terms used)

CNTXT, ENTXT, ENTXTC, CNKI, 3GPP: 标识, 参考信号, 偏移, 随机, 探测参考信号, 小区, 发送接收点,, SRS, TRP, cell, id, ap, offset, random, reference signal

### C.    DOCUMENTS CONSIDERED TO BE RELEVANT

| Category* | Citation of document, with indication, where appropriate, of the relevant passages | Relevant to claim No. |
| --- | --- | --- |
| X | CN 106375074 A (ZTE CORP.) 01 February 2017 (2017-02-01) description, paragraphs 10-156 | 1, 2, 17-19, 30-35 |
| Y | CN 106375074 A (ZTE CORP.) 01 February 2017 (2017-02-01) description, paragraphs 10-156 | 1 ,2, 17-19, 30-35 |
| Y | CN 111278004 A (VIVO MOBILE COMMUNICATION CO., LTD.) 12 June 2020 (2020-06-12) description, paragraphs 88-194 | 1, 2, 17-19, 30-35 |
| A | CN 109587792 A (HUAWEI TECHNOLOGIES CO., LTD.) 05 April 2019 (2019-04-05) entire document | 1-35 |
| A | EP 3120514 A1 (SAMSUNG ELECTRONICS CO., LTD.) 25 January 2017 (2017-01-25) entire document | 1-35 |
| A | US 2015036604 A1 (LG ELECTRONICS INC.) 05 February 2015 (2015-02-05) entire document | 1-35 |

| ✓ | Further documents are listed in the continuation of Box C. | ✓ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 July 2023** | **02 August 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2022/130167**

**C.    DOCUMENTS CONSIDERED TO BE RELEVANT**

| Category* | Citation of document, with indication, where appropriate, of the relevant passages | Relevant to claim No. |
|---|---|---|
| A | NOKIA et al. "R1-1711310, UL SRS design considerations in NR"<br>*3GPP tsg_ran\WG1_RL1*, No. TSGR1_AH, 17 June 2017 (2017-06-17),<br>    pages 1-6 | 1-35 |
| A | ZTE. "R1-1808192, Discussion on additional SRS symbols"<br>*3GPP tsg_ran\wg1_rl1*, 11 August 2018 (2018-08-11),<br>    pages 1-3 | 1-35 |

Form PCT/ISA/210 (second sheet) (July 2022)

**INTERNATIONAL SEARCH REPORT**
Information on patent family members

International application No.

**PCT/CN2022/130167**

| Patent document cited in search report | | | Publication date (day/month/year) | Patent family member(s) | | | Publication date (day/month/year) |
|---|---|---|---|---|---|---|---|
| CN | 106375074 | A | 01 February 2017 | WO | 2017012430 | A1 | 26 January 2017 |
| CN | 111278004 | A | 12 June 2020 | WO | 2020143525 | A1 | 16 July 2020 |
| | | | | CN | 111278004 | B | 08 June 2021 |
| CN | 109587792 | A | 05 April 2019 | WO | 2019062647 | A1 | 04 April 2019 |
| | | | | CN | 109587792 | B | 02 March 2021 |
| EP | 3120514 | A1 | 25 January 2017 | EP | 3120514 | A4 | 18 October 2017 |
| | | | | EP | 3120514 | B1 | 09 January 2019 |
| | | | | KR | 20150110243 | A | 02 October 2015 |
| | | | | ES | 2718735 | T3 | 04 July 2019 |
| US | 2015036604 | A1 | 05 February 2015 | KR | 20140124364 | A | 24 October 2014 |
| | | | | KR | 102004267 | B1 | 26 July 2019 |
| | | | | WO | 2013115598 | A1 | 08 August 2013 |
| | | | | US | 9655108 | B2 | 16 May 2017 |

Form PCT/ISA/210 (patent family annex) (July 2022)